# EUROPÄISCHE PATENTSCHRIFT

(11) **EP 3 317 952 B1**
(45) Veröffentlichungstag und Bekanntmachung des Hinweises auf die Patenterteilung: **07.08.2019**
(21) Anmeldenummer: 16732306.2
(22) Anmeldetag: 27.06.2016
(51) Int. Cl.: H02K 1/18, H02K 7/18, H02K 15/02, F03D 15/20

(54) **TRÄGERELEMENT, INSBESONDERE STATORTRÄGER-ELEMENT UND/ODER LÄUFERTRÄGER-ELEMENT, SYSTEM VON TRÄGERELEMENTEN, GENERATORTRÄGER, GENERATOR, GENERATOR-TRAGSYSTEM, GONDEL EINER WINDENERGIEANLAGE, WINDENERGIEANLAGE UND VERFAHREN ZUR MONTAGE EINES GENERATOR-TRAGSYSTEMS**
CARRIER ELEMENT, ESPECIALLY STATOR CARIER ELEMENT AND/OR ROTOR CARRIER ELEMENT, SYSTEM OF CARRIER ELEMENTS, GENERATOR CARRIER, GENERATOR, GENERATOR CARRIER SYSTEM, NACELLE OF A WIND TURBINE, WIND TURBINE AND METHOD FOR MOUNTING A GENERATOR CARRIER SYSTEM
ÉLÉMENT DE SUPPORT, EN PARTICULIER ÉLÉMENT DE SUPPORT D'UN STATOR ET/OU D'UN ROTOR, SYSTEM DES ÉLÉMENTS DE SUPPORT, SUPPORT DE GÉNÉRATEUR, GÉNÉRATEUR, SYSTÈME DE SUPPORT DE GÉNÉRATEUR, NACELLE D'UNE ÉOLIENNE, ÉOLIENNE ET PROCÉDÉ DE MONTAGE D'UN SYSTÈME DE SUPPORT DE GÉNÉRATEUR

(30) Priorität: 02.07.2015 DE 102015212453
(43) Veröffentlichungstag der Anmeldung: 09.05.2018
(73) Patentinhaber: Wobben Properties GmbH, 26607 Aurich (DE)
(72) Erfinder: SARTORIUS, Florian, 26789 Leer (DE)
(74) Vertreter: Eisenführ Speiser
(86) Internationale Anmeldenummer: PCT/EP2016/064874
(87) Internationale Veröffentlichungsnummer: WO 2017/001345

(56) Entgegenhaltungen:
- EP-A1- 2 621 054
- EP-A1- 2 685 602
- US-A1- 2011 266 909

## Beschreibung

Die Erfindung betrifft ein Trägerelement für einen Träger eines Ring-Generators, insbesondere ein Statorträger-Element für einen Statorträger eines Ring-Generators und/oder ein Läuferträger-Element für einen Läuferträger eines Ring-Generatorsein, wobei zur Bildung des jeweiligen Trägers eine Anzahl von Trägerelementen über eine Generatorfläche zusammengesetzt werden und welcher Träger mit einem außen-umfänglichen Tragring zur Anbringung einer Wicklung und mit einem innen-umfänglichen Tragflansch zur Anbringung eines Zapfens zur Verbindung mit einem Maschinenträger ausgebildet ist.

Die Erfindung betrifft weiter ein System aus einem mehrelementigen Träger mit einer Anzahl von Trägerelementen, insbesondere aus einem Statorträger und/oder einem Läuferträger. Die Erfindung betrifft weiter einen entsprechenden Generatorträger.

Die Erfindung betrifft weiter einen Generator sowie eine Gondel und eine Windenergieanlage und ein Verfahren zur Montage eines Generator-Tragsystems.

Eine Windenergieanlage, insbesondere eine Horizontalachsen-Windenergieanlage hat sich insbesondere als getriebelose Windenergieanlage bewährt. In solch einem Fall einer getriebelosen Windenergieanlage - die hier eingangs beispielhaft erläutert ist, was jedoch grundsätzlich als nicht einschränkend für die Erfindung gemeint ist - treibt ein aerodynamischer Rotor den Läufer eines Generators unmittelbar an, sodass durch Wechselwirkung der elektromagnetischen Felder im Generator zwischen Läufer und Stator die aus dem Wind gewonnene Bewegungsenergie in elektrische Energie umgewandelt wird.

Der Läufer des Generators dreht sich im Falle einer getriebelosen Windenergieanlage mit der Geschwindigkeit des aerodynamischen Rotors und damit mit vergleichsweise langsamer Drehzahl, weshalb ein solcher Generator auch als Langsamläufer bezeichnet wird. Aufgrund einer vergleichsweise hohen Polzahl der Wicklung wird bei bestehender Speisefrequenz die Nenndrehzahl also deutlich gesenkt. Entsprechend weist ein Langsamläufer der vorgenannten Art mit hoher Polzahl einen entsprechend großen Durchmesser auf, der mehrere Meter betragen kann, was grundsätzlich vorteilhaft ist. Problematisch dabei ist jedoch, dass ein für eine getriebelose Windenergieanlage vorgesehener Langsamläufer als Generator - der insofern vorzugsweise als ein Synchrongenerator gebildet ist - einen Durchmesser haben kann, welcher übliche Transportbreiten auf einer Straße deutlich übersteigt. So kann beispielsweise ein typischer am Luftspalt zwischen Läufer und Stator gemessener Luftspaltdurchmesser zehn Meter oder zwanzig Meter oder mehr betragen während eine maximale Straßenbreite für einen Transport beispielsweise nur etwa fünf Meter betragen kann.

Es ist grundsätzlich bekannt, wie beispielsweise in DE 10 2012 208 547 A1 beschrieben, einen Außenläufer eines Synchrongenerators einer getriebelosen Windenergieanlage mehrteilig auszubilden, wobei der Stator ungeteilt sein soll.

Aus DE 101 28 438 A1 und DE 100 33 233 A1 sind verschiedene Statorträger für einen Stator eines Generators einer Windenergieanlage bekannt. Solche Statorträger eignen sich jedoch nicht für eine zum Transport gewollte Teilung des Generators. Vielmehr setzen diese zwingend voraus, dass der Generator auf den dort beschriebenen Träger werkseitig fertiggestellt wird und ungeteilt transportiert wird.

So weist der in DE 100 33 233 A1 beschriebene Ring-Generator einen Stator und einen Läufer auf, wobei der Stator eine Tragkonstruktion aufweist, mittels der der Statorring und die Stator-Wicklung gehalten werden. Die Tragkonstruktion ist aus mehreren Tragarmen gebildet, die aus einer Stabkonstruktion bestehen.

Aus DE 100 40 273 A1 ist grundsätzlich bekannt, eine Generatoranordnung mit wenigstens zwei Statoren mit jeweils wenigstens einer Stator-Wicklung vorzusehen, wobei jedem Stator wenigstens ein elektrischer Strang - bevorzugt bestehend aus einem Gleichrichter, einem Wechselrichter und einem Transformator - zugeordnet ist. Beispielsweise können vier Statoren vorgesehen sein, wobei jeder einzelne Stator unter Beibehaltung der anderen Statoren ausgewechselt werden kann.

Das Deutsche Patent- und Markenamt hat in der Prioritätsanmeldung zur vorliegenden PCT-Anmeldung den folgenden Stand der Technik recherchiert: DE 100 40 273 A1, DE 101 28 438 A1, DE 10 2008 050 848 A1 und DE 10 2012 208 547 A1.

Die EP 2 621 054 A1 beschreibt einen Statoraufbau, der aus 2 Segmenten und einen Querkörper besteht.

Die US 2011/0266909 A1 offenbart einen segmentierten Rotor, der aus einer Nabe und mehreren daran befestigten Segmenten besteht.

Problematisch bei allen in den vorgenannten Dokumenten beschriebenen Ansätzen ist jedoch weiterhin, dass die darin beschriebenen konstruktiven (hinsichtlich der Träger) oder funktionellen (hinsichtlich des elektrischen Strangs) Teilungen eines Generators bereits konstruktiv noch zu verbessern sind.

An dieser Stelle setzt die Erfindung an, deren Aufgabe es ist, wenigstens eines der oben genannten Probleme zu adressieren. Insbesondere ist es Aufgabe der Erfindung, ein Trägerelement, einen Träger, insbesondere ein Statorträger-Element für einen Statorträger eines Ring-Generators und/oder Läuferträger-Element für einen Läuferträger eines Ring-Generators, ein System, einen Generator-Träger, ein Generator-Tragsystem, und einen Generator anzugeben, mittels dem die vorgenannte Transportproblematik in verbesserter Weise gelöst werden kann. Bevorzugt zusätzlich oder ggfs. alternativ dazu soll in verbesserter Weise die Konstruktion bzw. der Aufbau des Trägers vornehmbar ist.

Insbesondere ist es Aufgabe der Erfindung, einen Generator und ein diesem zugrunde liegendes Trägerelement und Träger anzugeben. Vorzugsweise ist der Generator als Synchrongenerator und Langsamläufer mit einem vergleichsweise großen Durchmesser, insbesondere einem Durchmesser eines Luftspalts von zehn Meter und mehr ausgebildet, wobei es Aufgabe ist, diesen dennoch in vergleichsweise verbesserter Weise teilbar transportierbar und/oder zusammensetzbar zu gestalten.

Insbesondere soll eine Gondel einer Windenergieanlage vorteilhaft assemblierbar sein. Insbesondere ist es Aufgabe der Erfindung, eine entsprechende Gondel und eine Windenergieanlage anzugeben, die von dem Trägerelement profitieren. Insbesondere soll ein verbessertes Verfahren zur Montage eines Generator-Tragsystems angegeben werden, wobei ein Transport eines Trägerelements und die Montage des Generator-Tragsystems vergleichsweise vereinfacht erfolgen soll. Insbesondere ist es Aufgabe der Erfindung, das Zusammensetzen der Trägerelemente an einem Aufbauort einer Windenergieanlage und/oder das Assemblieren eines Tragsystems in der Gondel der Windenergieanlage vergleichsweise vereinfacht zu gestalten, jedenfalls zur Verbesserung gegenüber dem Stand der Technik.

Die Aufgabe betreffend ein Trägerelement wird gelöst gemäß der Erfindung durch ein Trägerelement des Anspruchs 1, insbesondere ein Statorträger-Element des Anspruchs 2 und/oder - d.h. zusätzlich oder alternativ - ein Läuferträger-Element des Anspruchs 8.

Für das Trägerelement für einen Träger eines Ring-Generators, insbesondere Statorträger-Element für einen Statorträger eines Ring-Generators und/oder Läuferträger-Element für einen Läuferträger eines Ring-Generators, ist vorgesehen, dass zur Bildung des Trägers eine Anzahl von Trägerelementen über eine Generatorfläche zusammengesetzt werden und welcher Träger mit einem außen-umfänglichen Tragring zur Anbringung einer Wicklung und mit einem innen-umfänglichen Tragflansch zur Anbringung eines Zapfens zur Verbindung mit einem Maschinenträger ausgebildet ist. Erfindungsgemäß ist weiter vorgesehen, dass das Trägerelement aufweist:
- einen ersten Schenkel, der einem ersten Flächensektor der Generatorfläche zugeordnet und zum Zusammensetzen des Tragrings ausgebildet ist,
- einen zweiten Schenkel, der einem zweiten Flächensektor der Generatorfläche zugeordnet und zum Zusammensetzen des Tragrings ausgebildet ist, wobei
- der erste Schenkel und der zweite Schenkel an einem innen-vollumfänglich verlaufenden Sitzflansch anschließen, insbesondere einstückig anschließen, der zum Zusammensetzen des Tragflansches ausgebildet ist.

Die Erfindung führt auch auf ein System aus einem mehrelementigen Träger mit einer Anzahl von Trägerelementen nach Anspruch 14, insbesondere aus einem mehrelementigen Statorträger mit einer Anzahl von Statorträger-Elementen des Anspruchs 2 und/oder einem mehrelementigem Läuferträger mit einer Anzahl von Läuferträger-Elementen des Anspruchs 8.

Die Erfindung geht von der Überlegung aus, dass es bei einem Trägerelement zur Bildung des Trägers mit einer Anzahl von Trägerelementen über eine Generatorfläche unter Zusammensetzen derselben, bislang in noch zu verbessernder Weise ein außen-umfänglicher Tragring und ein innen-umfänglicher Tragflansch zusätzlich und nachfolgend assembliert werden müssen an einen Schenkel eines Trägerelementes.

Die Erfindung hat erkannt, dass es beim Trägerelement vorteilhaft berücksichtigt werden kann, dass zur Bildung des Trägers eine Anzahl von Trägerelemente über eine Generatorfläche zusammengesetzt werden und der Träger mit einem außen-umfänglichen Tragring zur Anbringung einer Wicklung und mit einem innen-umfänglichen Tragflansch, insbesondere zur Vermittlung zu einem Zapfen zur Verbindung mit einem Maschinenträger, insbesondere zur Anbringung eines Zapfens ausgebildet ist.

Dementsprechend sieht das Konzept der Erfindung hinsichtlich des Trägerelements vor:
- einen ersten Schenkel, der einem ersten Flächensektor der Generatorfläche zugeordnet und zum Zusammensetzen des Tragrings ausgebildet ist,
- einen zweiten Schenkel, der einem zweiten Flächensektor der Generatorfläche zugeordnet und zum Zusammensetzen des Tragrings ausgebildet ist, wobei
- der erste Schenkel und der zweite Schenkel an einem innen-vollumfänglich verlaufenden Sitzflansch anschließen, der zum Zusammensetzen des Tragflansches ausgebildet ist.

Dementsprechend sieht das Konzept der Erfindung hinsichtlich des Statorträger-Elements vor:
- einen ersten Stator-Schenkel, der einem ersten Flächensektor der Generatorfläche zugeordnet und zum Zusammensetzen des Stator-Tragrings ausgebildet ist,
- einen zweiten Stator-Schenkel, der einem zweiten Flächensektor der Generatorfläche zugeordnet und zum Zusammensetzen des Stator-Tragrings ausgebildet ist, wobei
- der erste Stator-Schenkel und der zweite Stator-Schenkel an einem innen-vollumfänglich verlaufenden Stator-Sitzflansch anschließen, der zum Zusammensetzen des Stator-Tragflansches ausgebildet ist.

Entsprechend sieht das Konzept der Erfindung betreffend das Läuferträger-Element vor:
- einen ersten Läufer-Schenkel, der einem ersten Flächensektor der Generatorfläche zugeordnet und zum Zusammensetzen des Läufertragrings ausgebildet ist,
- einen zweiten Läufer-Schenkel, der einem zweiten Flächensektor der Generatorfläche zugeordnet und zum Zusammensetzen des Läufertragrings ausgebildet ist, wobei
- der erste Läufer-Schenkel und der zweite Läufer-Schenkel an einem innen-vollumfänglich verlaufenden Läufer-Sitzflansch anschließen, der zum Zusammensetzen des Läufertragflansches ausgebildet ist.

Insbesondere ist vorgesehen, dass der erste und zweite Stator-Schenkel an dem innen-vollumfänglich verlaufenden Stator-Sitzflansch einstückig anschließen. Insbesondere ist vorgesehen, dass der erste Läufer-Schenkel und der zweite Läufer-Schenkel an dem innen-vollumfänglich verlaufenden Läufer-Sitzflansch einstückig anschließen.

Die Erfindung führt auch auf einen Generatorträger des Anspruchs 15 und einen Generator des Anspruchs 16 mit einem solchen Generatorträger bzw. Träger, insbesondere Statorträger und/oder Läuferträger.

Das Konzept der Erfindung führt auch auf ein Generator-Tragsystem des Anspruchs 17 mit einem solchen Generator, aufweisend:
- einen Maschinenträger mit einem Aufnahmezapfen zum Tragen des Stators, wobei der Statorträger mit dem mittels Stator-Sitzflanschen gebildeten Stator-Tragflansch am Aufnahmezapfen angebracht ist, und/oder
- einen Achszapfen zur Anbringung einer Rotornabe, wobei der Läuferträger, insbesondere mit dem mittels Läufer-Sitzflanschen gebildeten Läufer-Tragflansch, an der Rotornabe angebracht ist.

Das Konzept der Erfindung führt auch auf eine Gondel des Anspruchs 19 für eine Windenergieanlage. Die Gondel hat erfindungsgemäß eine hintere Gondelverkleidung und mit einem Generator-Tragsystem gemäß dem Konzept der Erfindung sowie einen Rotor, umfassend die Rotornabe, unter Fortsetzung der hinteren Gondelverkleidung.

Das Konzept der Erfindung führt auch auf eine Windenergieanlage des Anspruchs 20, die insbesondere als eine getriebelose Windenergieanlage ausgebildet ist. Erfindungsgemäß weist die Windenergieanlage auf:
- einen Turm mit einem Kopfflansch, und
- eine Gondel mit einem Generator-Tragsystem nach wenigstens einem der Ansprüche 7 oder 18, wobei der Maschinenträger am Kopfflansch angeschlossen ist und wobei die Gondel eine hintere Gondelverkleidung aufweist, sowie
- mit einem Rotor umfassend eine Rotornabe unter Fortsetzung der hinteren Gondelverkleidung.

Das Konzept der Erfindung führt auch auf ein Verfahren zur Montage eines Generator-Tragsystems der vorgenannten Art, bei dem
- ein Statorträger und ein Läuferträger eines Systems nach Anspruch 13 zur Montage temporär über einen Montageklotz verbunden werden zur Bildung eines Generatorträgers, und
- der Generatorträger, insbesondere als Teil eines Generators, mit temporär verbundenem Statorträger und Läuferträger an einen Aufnahmezapfen des Maschinenträgers angebracht wird, wobei
- der Statorträger mit dem mittels Stator-Sitzflanschen gebildeten Stator-Tragflansch am Aufnahmezapfen angebracht wird, und wobei
- der Läuferträger, vorzugsweise mit dem mittels Läufer-Sitzflanschen gebildeten Läufer-Tragflansch, an der Rotornabe angebracht wird und ein Achszapfen die Rotornabe lagernd aufnimmt.

Die Erfindung hat den Vorteil, dass mittels den erfindungsgemäß ausgestalteten Trägerelementen der Tragring beim Zusammensetzen des Trägers gleich mit zusammengesetzt wird, wobei eine Assemblierung des Trägers an einem Generator-Tragsystem vergleichsweise einfach ermöglicht ist, indem ein vollumfänglich verlaufender Sitzflansch vorgesehen ist, an den der erste Schenkel und der zweite Schenkel, vorzugsweise einstückig, anschließen.

Insbesondere ist also vorgesehen, dass mittels den erfindungsgemäß ausgestalteten Statorträger-Elementen zum Zusammensetzen des Statorträgers und/oder erfindungsgemäß ausgestalteten Läuferträger-Elementen zum Zusammensetzen des Läuferträgers der Stator-Tragring beziehungsweise Läufertragring gleich mit zusammengesetzt wird, wobei eine Assemblierung des Statorträgers beziehungsweise Läuferträgers an einem Generator-Tragsystem vergleichsweise einfach ermöglicht ist, indem ein innen-vollumfänglich verlaufender Stator-Sitzflansch, beziehungsweise ein innen-vollumfänglich verlaufender Läufer-Sitzflansch, vorgesehen ist, an den der erste Schenkel und der zweite Schenkel, vorzugsweise einstückig, anschließen. D.h. der erste Stator-Schenkel und der zweite Stator-Schenkel schließen an einem innen-vollumfänglich verlaufenden Stator-Sitzflansch an, insbesondere einstückig, der zum Zusammensetzen des Stator-Tragflansches ausgebildet ist. Bzw. der erste Läufer-Schenkel und der zweite Läufer-Schenkel schließen an einem innen-vollumfänglich verlaufenden Läufer-Sitzflansch an, insbesondere einstückig, der zum Zusammensetzen des Läufer-Tragflansches ausgebildet ist.

Beim Zusammensetzen der Trägerelemente ist somit ein zusätzlicher Arbeitsschritt vermieden, derart, dass beim Zusammensetzen der Trägerelemente ein entsprechender außen-umfänglicher Tragring des Trägers mit zusammengesetzt wird. Des Weiteren ist mittels eines innen-vollumfänglich verlaufenden Sitzflansches eine besonders sichere Vorgabe geschaffen, die Sitzflansche zum Zusammensetzen des Tragflansches auszurichten, insbesondere zu zentrieren, und einem Zapfen des Generator-Tragsystems zuzuordnen. Vorteilhaft ist der Sitzflansch bereits Teil eines entsprechenden innen-umfänglichen Tragflansches zur Vermittlung zu einem Zapfen zur Verbindung mit einem Maschinenträger, insbesondere zur jedenfalls mittelbaren Anbringung beziehungsweise Zuordnung zu einem Zapfen.

Die Trägerelemente gemäß dem Konzept der Erfindung bieten auch den Vorteil, dass diese bereits wetterfest ausgebildet werden können. Dies betrifft insbesondere die Anbringung einer Stator-Wicklung am Stator-Tragring-Segment des Statorträger-Elements beziehungsweise die Anbringung einer Läuferwicklung am Läufer-Tragring-Segment des Läuferträger-Elements. Dies ermöglicht es, einen Generator vorzusehen, der bei einer Gondel zwischen einer Rotornabe und einer hinteren Gondelverkleidung über den so vorgegebenen Verlauf der Gondelverkleidung hinaus, also aus der Gondel herausragt.

Gemäß dem vorgeschlagenen Verfahren zur Montage eines Generator-Tragsystems des Anspruchs 21, bietet die Erfindung eine vergleichsweise sichere und einfache Montagemöglichkeit, wobei der Statorträger und der Läuferträger zur Bildung eines Generatorträgers temporär über einen Montageklotz verbunden werden. Vorzugsweise bietet diese Maßgabe die Möglichkeit, den Montageklotz mit dem Stator-Sitzflansch eines Statorträger-Elements und dem Läufer-Sitzflansch eines Läuferträger-Elements für eine Montage zeitweise zu verbinden.

Insgesamt bietet das Konzept der Erfindung die Möglichkeit, ein Trägerelement - d.h. insbesondere ein Statorträger-Element beziehungsweise Läuferträger-Element - entlang eines Verlaufs - insbesondere eines diametralen Verlaufs eines sich diametral gegenüberliegenden - ersten Flächensektors und zweiten Flächensektors auf einem Transportfahrtzeug anzuordnen, insbesondere länglich anzuordnen entlang des diametralen Verlaufs. Dabei kann in dem Fall gleichwohl das Trägerelement entsprechend der Länge des ersten und zweiten Flächensektors für einen Synchrongenerator als Langsamläufer mit vergleichsweise großem Durchmesser vorgesehen sein. Kurz gesagt, kann ein Trägerelement, insbesondere ein Statorträger-Element oder ein Läuferträger-Element, durchaus eine Länge von zehn Meter, zwanzig Meter oder mehr aufweisen entlang des axial angeordneten ersten und zweiten Flächensektors. So kann selbst bei vergleichsweise engen Straßenverläufen, z.B. von fünf Metern oder weniger, ein Trägerelement separat von anderen Trägerelementen transportiert werden; d.h. eine mehrteiliger Träger kann in seine Trägerlemente zerlegt transportiert werden. Dennoch kann vergleichsweise einfach eine Montage der Anzahl von Trägerelementen zu einem Träger erfolgen. Insbesondere kann eine Anzahl von Statorträger-Elementen zu einem Statorträger beziehungsweise eine Anzahl von Läuferträger-Elementen zu einem Läuferträger vergleichsweise einfach zusammengesetzt werden, da der innen-umfängliche Tragring und der außenumfängliche Tragflansch des Trägers beim Zusammensetzen der Trägerelemente gleich mit gebildet wird.

Vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

Der Einfachheit halber wird im Folgenden teilweise auf ein Trägerelement Bezug genommen, wobei dazu ein Statorträger-Element oder ein Läuferträger-Element oder ein Statorträger-Element und ein Läuferträger-Element zu verstehen ist. Ebenso wird zum Teil Bezug genommen auf einen Träger, wobei dazu ein Statorträger oder ein Läuferträger oder ein Statorträger und ein Läuferträger zu verstehen ist. Ähnlich wird im Folgenden der Einfachheit halber teilweise auf einen Tragring für einen Stator-Tragring und/oder Läufer-Tragring beziehungsweise auf einen Tragflansch für einen Stator-Tragflansch und/oder Läufer-Tragflansch Bezug genommen. Ähnlich wird für einen Stator beziehungsweise Läufer im Folgenden teilweise Bezug genommen unter allgemeiner Benennung eines Schenkels, Tragarms, Tragrings oder Tragring-Segments oder Sitzflansches.

Im Rahmen einer Weiterbildung hat es sich als vorteilhaft erwiesen, dass der erste Schenkel einen ersten radial verlaufenden Tragarm und ein am ersten Tragarm anschließendes erstes außen-umfänglich verlaufendes Tragring-Segment zur Bildung des Tragrings aufweist und der zweite Schenkel einen zweiten radial verlaufenden Tragarm und ein am zweiten Tragarm anschließendes zweites außen-umfänglich verlaufendes Tragring-Segment zur Bildung des Tragrings aufweist.

Vorteilhaft kann unter gegenseitig verdrehter Anordnung unterschiedlicher Trägerelemente und damit unter umfänglichem Versatz unterschiedlicher Tragring-Segmente der Tragring zu bilden sein.

Insbesondere hat es sich als vorteilhaft erwiesen, dass zusätzlich oder alternativ ein Tragring-Segment an einem oder mehreren Tragarmen des Schenkels anschließt, insbesondere einstückig anschließt. Beispielsweise kann ein Schenkel ein, zwei, drei oder mehr Tragarme - ähnlich einer Anordnung von Speichen - aufweisen, an die ein Tragringsegement in geeigneter Weise angeschlossen ist, insbesondere einstückig angeschlossen ist.

Im Rahmen einer für ein Trägerlement, insbesondere Statorträger-Element und ein Läuferträger-Element, vorteilhaft vorgesehenen Weiterbildung liegen sich der erste Flächensektor der Generatorfläche zur Bildung des Tragrings mit dem ersten Schenkel und der zweite Flächensektor der Generatorfläche zur Bildung des Tragrings mit dem zweiten Schenkel in einer Scheitelwinkelanordnung gegenüber. Anders ausgedrückt sind der erste und zweite Schenkel beziehungsweise der erste Flächensektor der Generatorfläche und der zweite Flächensektor der Generatorfläche entlang eines Durchmesserverlaufs gegenüberliegend angeordnet. Grundsätzlich kann ein Schenkel ein, zwei oder mehr Tragarme aufweisen. Insbesondere hat es sich als vorteilhaft erwiesen, dass sich ein erster Stator-Tragarm und ein zweiter Stator-Tragarm diametral gegenüber liegen.

Grundsätzlich ist diese längliche Anordnung des ersten und zweiten Schenkels gegenüber nicht zwingend; es könnte auch beispielsweise ein erster und zweiter Schenkel in einem 90°- Winkel zueinander angeordnet werden; dies würde die Transportsituation gleichwohl verbessert gestalten im Vergleich zu einem vollständig assemblierten Träger (insbesondere Statorträger oder Läuferträger).

Beispielsweise hat es sich als vorteilhaft erwiesen, dass ein erster und zweiter Tragarm in Form eines den ersten und zweiten Flächensektor überdeckenden Flachteils gebildet ist. Das Flachteil kann beispielsweise als ein Speichenteil gebildet sein, das einen ersten, zweiten Tragarm oder mehr Tragarme aufweist.

Der vom Tragring-Segment überstrichene Winkelausschnitt des außen-umfänglichen Vollwinkels des Tragrings ist davon abhängig, wie hoch die Anzahl von Trägerelementen ist, zur Bildung des Trägers. Wenn beispielsweise, wie bevorzugt, drei Trägerelemente - insbesondere Statorträger-Elemente zur Bildung eines Statorträgers beziehungsweise Läuferträger-Elemente zur Bildung eines Läuferträgers - vorgesehen sind, hat es sich als vorteilhaft erwiesen, dass ein erster und zweiter Schenkel jeweils drei Tragarme aufweisen, an denen jeweils ein Tragring-Segment außen-umfänglich, vorzugsweise einstückig, anschließt. Wenn beispielsweise, wie auch bevorzugt, vier Trägerelemente - insbesondere Statorträger-Elemente zur Bildung eines Statorträgers beziehungsweise Läuferträger-Elemente zur Bildung eines Läuferträgers - vorgesehen sind, hat es sich als vorteilhaft erwiesen, dass jeder Schenkel zwei Tragarme vorsieht, an denen ein entsprechendes Tragring-Segment, vorzugsweise einstückig, angeschlossen ist.

Insbesondere hat es sich als vorteilhaft erwiesen, dass zusätzlich oder alternativ unter verdrehter Anordnung unterschiedlicher Trägerelemente - insbesondere Statorträger-Elemente beziehungsweise Läuferträger-Elemente - und damit unter umfänglichem Versatz unterschiedlicher Tragring-Segmente Tragring zu bilden ist. Ist beispielsweise eine Anzahl von drei Trägerelementen zur Bildung eines Trägers mit jeweils einem ersten und zweiten Schenkel vorgesehen, überstreicht vorteilhaft jeder Schenkel einen Flächensektor der Generatorfläche, der einem umfänglichen Winkel von 60° entspricht. Sind dagegen vier Trägerelemente vorgesehen, überstreicht vorteilhaft jeder Schenkel einen Flächensektor der Generatorfläche, der einem umfänglichen Winkel von 45° entspricht.

Ein Tragring-Segment kann, muss aber nicht, mit einem seitlich dazu benachbarten Tragring-Segment eines anderen Trägerelements stützend und fest verbunden werden beim Zusammensetzen der Trägerelemente. Insbesondere im Fall eines einstückigen Anschließens eines Tragring-Segments an einen Tragarm, erweist sich ein Trägerelement jedoch als ausreichend stabil, sodass auch ein Spalt zwischen den benachbarten Tragring-Segmenten verbleiben kann nach dem Zusammensetzen der Trägerelemente. Besonders bevorzugt ist bei einem Trägerelement - insbesondere einem Statorträger-Element beziehungsweise Läuferträger-Element - vorgesehen, dass der erste Tragarm und der zweite Tragarm an dem innen-vollumfänglich verlaufenden Sitzflansch anschließen, wobei der Sitzflansch vollumfänglich eine Öffnung umgibt, die entlang einer Zentrierachse zur Aufnahme des Aufnahmezapfens dient. Der vollumfänglich verlaufende Sitzflansch um die Öffnung zur Aufnahme des Aufnahmezapfens kann somit in Bezug auf benachbarte Sitzflansche eines benachbarten Trägerelements zentriert werden. Dies bietet die Möglichkeit, durch Nebeneinanderlegen der Anzahl von Sitzflansche entsprechend der Anzahl von Trägerelementen entlang der Zentrierachse den Tragflansch zur Anbringung eines Zapfens in der genannten Öffnung in besonders bevorzugter Weise zu bilden. Insbesondere hat es sich als vorteilhaft erwiesen, dass zusätzlich oder alternativ der Sitzflansch zur Bildung des innen-umfänglichen Tragflansches mit einer Anzahl von Sitzflanschen entlang der Zentrierachse anzuordnen ist, wobei unter axialem Versatz der Sitzflansche entlang der Zentrierachse der Tragflansch gebildet wird.

Bevorzugt ist der innen-vollumfänglich verlaufende Sitzflansch zur Bildung des Tragflansches mit einem Zentriereinsatz versehen, der ausgebildet ist, den Sitzflansch des Trägerelements an einem entlang der Zentrierachse axial versetzten und benachbarten anderen Sitzflansch der Anzahl von Sitzflanschen zu zentrieren. Besonders bevorzugt weist ein Sitzflansch einen Zentrieransatz auf, mittels dem der Sitzflansch gegenüber einem ersten benachbarten und/oder zweiten benachbarten Sitzflansch in axialer Richtung zentriert werden kann. Beispielsweise hat es sich als vorteilhaft erwiesen, den Zentriereinsatz mit einer umfänglich verlaufenden Zentrierstufe zu bilden. Vorteilhaft weist die Zentrierstufe eine umfänglich und entlang der Zentrierachse verlaufende Zentrieransatzfläche auf sowie eine erste und zweite daran anschließende umfänglich und radial verlaufende Stirn-Anschlagfläche auf.

Die bereits in einer Aufspannung zu realisierenden Tragring-Segmente und Zentrierungen am Tragflansch lassen sich werkseitig bei der Herstellung eines Trägerelements vergleichsweise einfach realisieren.

Je nach Anzahl der Trägerelemente kann ein Tragflansch eines Trägers beispielsweise durch eine Aneinanderreihung in axialer Richtung von drei, vier oder mehr Sitzflanschen gebildet werden. So kann der Stator-Tragflansch bereits durch Zusammensetzen der Statorträger-Elemente zum Statorträger vollständig ausgebildet sein, um diesen am Aufnahmezapfen des Maschinenträgers anzubringen. So kann der Läufer-Tragflansch bereits durch Zusammensetzen der Läuferträger-Elemente zum Läuferträger vollständig ausgebildet sein, um durch diesen einen Achszapfen zu führen, insbesondere zu lagern.

Konkret hat es sich hinsichtlich des Statorträgers als besonders bevorzugt erwiesen, dass unter gegenseitig verdrehter Anordnung des Statorträger-Elements und eines weiteren Statorträger-Elements und damit unter umfänglichen Versatz unterschiedlicher Stator-Tragring-Segmente der Statortragring gebildet wird und weiter der Stator-Sitzflansch zur Bildung des innen-umfänglichen Stator-Tragflansches mit einem weiteren Stator-Sitzflansch entlang der Zentrierachse und zentriert zueinander angeordnet wird, wobei unter axialem Versatz des Stator-Sitzflansches und des weiteren Stator-Sitzflansches entlang der Zentrierachse der Stator-Tragflansch gebildet wird. Beispielsweise kann bei Vorsehen von zwei Statorträger-Elementen zur Bildung des Statorträgers bereits die zueinander zentrierte Anordnung von zwei Stator-Sitzflanschen, beziehungsweise generell von zwei Sitzflanschen zueinander, ein Tragflansch gebildet sein.

Konkret hat es sich hinsichtlich des Läuferträgers als besonders bevorzugt erwiesen, dass unter gegenseitig verdrehter Anordnung des Läuferträger-Elements und eines weiteren Läuferträger-Elements und damit unter umfänglichen Versatz unterschiedlicher Läufer-Tragring-Segmente der Läufertragring gebildet wird und weiter der Läufer-Sitzflansch zur Bildung des innen-umfänglichen Läufer-Tragflansches mit einem weiteren Läufer-Sitzflansch entlang der Zentrierachse und zentriert zueinander angeordnet wird, wobei unter axialem Versatz des Läufer-Sitzflansches und des weiteren Läufer-Sitzflansches entlang der Zentrierachse der Läufer-Tragflansch gebildet wird. Beispielsweise kann bei Vorsehen von zwei Läuferträger-Elementen zur Bildung des Läuferträgers bereits die zueinander zentrierte Anordnung von zwei Läufer-Sitzflanschen, beziehungsweise generell von zwei Sitzflanschen zueinander, ein Tragflansch gebildet sein.

Hinsichtlich des Statorträger-Elements hat es sich als besonders vorteilhaft erwiesen, dass an den ersten und zweiten Stator-Tragarm ein Stator-Tragring-Segment in Form einer Berandungszarge und im Querschnitt T-förmig, insbesondere mittig, anschließt. Diese Maßgabe hat sich als besonders vorteilhaft zur Bildung eines innerhalb des Läuferträgers anzuordneten Statorträgers erwiesen.

Insbesondere ist diese Maßgabe vorteilhaft für den Fall, dass der Läufer als Außenläufer beim Generator vorgesehen wird.

Dementsprechend hat es sich weiterhin als vorteilhaft erwiesen, dass an den ersten und zweiten Läufer-Tragarm ein Läufer-Tragring-Segment in Form einer Berandungszarge im Querschnitt L-förmig, insbesondere seitlich, anschließt. Insofern kann man bildlich gesehen den Läuferträger in etwa topfartig ausbilden, indem der Statorträger eingesetzt wird unter Belassen eines Luftspalts. Die vorgenannten Weiterbildungen hinsichtlich des Statorträger-Elements und Läuferträger-Elements betreffend die Anordnung der Brandungszarge tragen diesen Überlegungen in besonders bevorzugter Weise Rechnung.

Insbesondere hat es sich als vorteilhaft erwiesen, dass der Sitzflansch umfänglich angeordnete erste Öffnungen aufweist zur Aufnahme von Montageschrauben, die zur Anbringung und Wiederentfernung, das heißt insbesondere temporär zum Transport und/oder Montage, vorgesehen sind, das heißt generell als Hilfsverschraubung. Des Weiteren weist ein Sitzflansch zusätzlich oder alternativ umfänglich angeordnete zweite Öffnungen auf für Betriebsschrauben, die als Hauptverschraubung zum Verbleib beim Betrieb des Generators vorgesehen sind, das heißt zur Aufnahme von und zur Anbringung und Verbleiben der Betriebsschrauben. Die Weiterbildung hat erkannt, dass die Anbringung für Montageschrauben und Betriebsschrauben im Sitzflansch besonders vorteilhaft ist, da diese leicht und mit vergleichsweise hoher Stabilität umsetzbar ist.

insichtlich des Systems aus einem mehrelementigen Statorträger mit einer Anzahl von Statorträger-Elementen und/oder einem mehrelementigen Läuferträger mit einer Anzahl von Läuferträger-Elementen hat es sich als besonders vorteilhaft erwiesen, dass jedes der Trägerelemente von einem anderen Trägerelement abnehmbar und wieder ansetzbar ist. Insbesondere kann jedes der Trägerelemente von einem anderen Trägerelement abnehmbar und wieder ansetzbar sein mit einer eigenen elektrischen Generatorfunktion.

Insbesondere kann dadurch gewährleistet sein, dass selbst mit der elektrischen Generatorfunktion die Trägerelemente getrennt transportierbar sind.

Zur Darstellung einer Generatorfunktion hat es sich bereits als vorteilhaft erwiesen, wenn die Trägerelemente entsprechende Wicklungen auf dem Tragring und die Anschlussverkabelung und die Polpakete aufweisen.

Hinsichtlich des Generatorträgers hat es sich als vorteilhaft erwiesen, dass eine Anzahl von wenigstens zwei, drei oder vier oder mehr Statorträgern oder eine Anzahl von drei oder vier oder mehr Läuferträgern oder eine Anzahl von zwei, drei oder vier oder mehr Statorträgern und eine Anzahl von wenigstens zwei, drei oder vier oder mehr Läuferträgern vorgesehen ist.

Insbesondere ist es auch möglich, dass der Generatorträger mit einer Anzahl von wenigstens zwei, drei oder vier Statorträgern gebildet ist, in Kombination mit einem unteilbaren, das heißt insbesondere einelementigen, Läuferträger gebildet ist. Insbesondere hat es sich als vorteilhaft erwiesen, dass eine Anzahl von wenigstens zwei, drei oder vier Läuferträgern gebildet ist, in Kombination mit einem unteilbaren, insbesondere einelementigen Statorträger. Eine solche Weiterbildung berücksichtigt, dass gegebenenfalls ein Stator oder Rotor ungeteilt zu transportieren ist, wenn es eher vorteilhaft ist, diesen einelementig im Werk vollständig auszubilden.

Hinsichtlich des Generators hat es sich dementsprechend als besonders vorteilhaft erwiesen, dass jedes der Statorträger-Elemente und Läuferträger-Elemente mit einem eigenen elektrischen Anschluss ausgebildet ist, der dazu vorgesehen ist, eine eigenen funktionsfähige Generatorfunktion zur Verfügung zu stellen. Das Konzept der Erfindung erstreckt sich somit nicht nur auf Statorträger-Elemente beziehungsweise Läuferträger-Elemente wie vorgenannt, sondern auch auf Statorelemente beziehungsweise Läuferelemente umfassend jeweils ein Trägerelement und die zugehörige vollständige Generatorfunktion mit den entsprechenden Wicklungen und elektrischen Anschlüssen. Insofern ist gewährleistet, dass ein Generator mit beispielsweise wenigstens zwei, drei oder vier oder mehr Statorelementen und wenigstens zwei, drei oder vier oder mehr Läuferelementen bereits dann funktionsfähig ist, wenn nur eines der Statorelemente und Läuferelemente funktionsfähig ist.

Im Rahmen einer besonders bevorzugten Weiterbildung kann für den Generator vorgesehen sein, dass an jedem der Statorträger-Elemente mit einer Stator-Wicklung und/oder an jedem der Läuferträger-Elemente mit einer Läuferwicklung, also zum Zwecke einer eigenen funktionsfähigen Generatorfunktion, jeweils ein eigener funktionsfähiger Anschluss an einen Netzanschluss für die eigene funktionsfähige Generatorfunktion vorgesehen ist. Insbesondere ist für den funktionsfähigen Anschluss vorgesehen, dass jeweils ein Gleichrichter, ein Gleichstromleiter, ein Wechselrichter und ein Transformator an ein Statorelement, das heißt Statorträger-Element mit einer Stator-Wicklung und/oder Läuferelement, das heißt Läuferträger-Element mit einer Läuferwicklung angeschlossen ist.

Hinsichtlich des Generator-Tragsystems hat es sich als besonders vorteilhaft erwiesen, dass der mittels Stator-Sitzflansch gebildete Stator-Tragflansch unmittelbar zwischen dem Aufnahmezapfen und dem Achszapfen angeordnet ist. Insbesondere hat es sich als vorteilhaft erwiesen, dass der mittels Stator-Sitzflansch gebildete Stator-Tragflansch stirnseitig des Stator-Tragflansches beidseitig eingeflanscht ist zwischen dem Aufnahmezapfen und dem Achszapfen. Insbesondere hat es sich als vorteilhaft erwiesen, dass dadurch stetig verlaufend der Achszapfen über den Stator-Tragflansch an den Aufnahmezapfen des Maschinenträgers angeschlossen ist. Mit anderen Worten wird der durch die Stator-Sitzflansche gebildete Stator-Tragflansch in den konstruktiven Verlauf des Maschinenträgers zum Aufnahmezapfen und dann zum Achszapfen über den Stator-Tragflansch weitergebildet. Und dies hat Vorteile, da insbesondere unter Berücksichtigung der oben genannten Zentrierung, ohne weitere Justage der Maschinenträger bis zum Achszapfen zusammengesetzt werden kann mit dem Generator-Tragsystem.

Insbesondere hat es sich in einer Alternative als vorteilhaft erwiesen, dass der mittels Stator-Sitzflansch gebildete Stator-Tragflansch unmittelbar auf dem Aufnahmezapfen aufgesteckt ist, insbesondere den Aufnahmezapfen des Maschinenträgers fest umgibt. Diese alternative Weiterbildung ist ebenfalls insbesondere im Rahmen der Zentrierweiterbildung realistisch und kann als Alternative zur Integration des Stator-Tragflansches zwischen Aufnahmezapfen und Achszapfen gesehen werden.

Vorteilhaft kann der mittels Läufer-Sitzflansch gebildete Tragflansch mittelbar an der Rotornabe angebracht sein und der Achszapfen kann frei drehbar von diesem umgeben sein.

Die Erfindung bietet in vorteilhafter Weise die Grundlage für eine Weiterbildung der Gondel mit dem Generator-Tragsystem, wobei das Generator-Tragsystem mit dem Generator von der Gondelverkleidung und der Rotornabe umgeben sein kann. Grundsätzlich lassen sich die Trägerelemente, insbesondere ein Statorelement oder Läuferelement mit entsprechenden Wicklungen, auch wetterfest ausbilden, sodass das Generator-Tragsystem von der Gondelverkleidung umgeben sein kann, wobei der Generator zwischen Rotornabe und hinterer Gondelverkleidung herausragt.

Im Rahmen des Verfahrens hat es sich als besonders vorteilhaft erwiesen, dass die Rotornabe auf dem Achszapfen vormontiert wird zur Bildung einer Nabenlagerung. Dies kann insbesondere ab Werk geschehen.

Weiter ist im Rahmen der Weiterbildung des Verfahrens vorgesehen, dass die Nabenlagerung mit dem Achszapfen an den Aufnahmezapfen des Maschinenträgers gesetzt wird. Dies vereinfacht erheblich die Montage am Aufbauort der Windenergieanlage, wenn die Nabenlagerung wie genannt, bereits vormontiert ist an dem Achszapfen.

Anschließend kann die Anzahl von Rotorblättern zur Bildung des Rotors an die Blattflanschlager der Rotornabe angesetzt werden. Vorteilhaft weist die Rotornabe drei Blattflanschlager für drei Rotorblätter auf.

Der Generator wird im Rahmen des Verfahrens vorteilhaft als ein Synchrongenerator für eine getriebelose Windenergieanlage in Form eines Ring-Generators montiert.

Ausführungsbeispiele der Erfindung werden nun nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsbeispiele sowie anhand der Zeichnung; diese zeigt in:
Im Einzelnen zeigt die Zeichnung in:
- FIG.1: den grundsätzlichen Aufbau einer Windenergieanlage mit einem Turm und einer Gondel, vorliegend als eine getriebelose Windenergieanlage mit einem Synchrongenerator als Langsamläufer in Form eines Ring-Generators im Rahmen einer besonders bevorzugten Ausführungsform;
- FIG.2: einen Längsschnitt durch die Gondel der Windenergieanlage der FIG.1 unter Darstellung des Generator-Tragsystems mit einem Generator, nämlich insbesondere mit einem Kopfflansch des Turms, einem Maschinenträger, einem Aufnahmezapfen und einem Achszapfen und einer daran gelagerten Rotornabe, wobei ein Stator-Tragflansch eines Statorträgers des Generators zwischen dem Aufnahmezapfen und dem Achszapfen einbringbar ist gemäß einer bevorzugten Ausführungsform;
- FIG.3: eine perspektivisch vereinfachte Darstellung des Generator-Tragsystems wie es in Bezug auf FIG.2 erläutert ist mit dem Generator gemäß einer bevorzugten Ausführungsform, wobei von diesem lediglich der Generatorträger zwischen dem Aufnahmezapfen am Maschinenträger und dem Achszapfen mit Rotornabe gezeigt ist;
- FIG.4: eine vereinfachte Darstellung des Kopfflansches des Turms mit dem Maschinenträger und dem Aufnahmeflansch wie dies in Bezug auf FIG.3 erläutert ist;
- FIG.5: eine vereinfachte Darstellung des teilweise zusammengesetzten Generator-Tragsystems der FIG.4, wobei der davon dargestellte Stator-Tragflansch des Statorträgers des Generators zwischen dem Aufnahmezapfen und dem Achszapfen eingeflanscht ist gemäß einer bevorzugten Ausführungsform;
- FIG.5A, FIG.5B, FIG.5C: eine perspektivische Darstellung einer verdrehten Anordnung unterschiedlicher, vorliegend drei, Statorträger-Elemente und damit unter umfänglichen Versatz der unterschiedlichen Stator-Tragring-Segmente des Stator-Tragrings, wobei der Stator-Sitzflansch zur Bildung des innen-umfänglichen Stator-Tragflansches mit einer Anzahl von Stator-Sitzflanschen entlang der Zentrierachse angeordnet wird unter axialem Versatz der Anzahl von Stator-Sitzflanschen entlang der Zentrierachse;
- FIG.6: eine Explosionszeichnung zur weiteren Erläuterung der in FIG.5A, FIG.5B, FIG.5C gezeigten verdrehten Anordnung unterschiedlicher Statorträger-Elemente und damit unter umfänglichen Versatz unterschiedlicher Stator-Tragring-Segmente die Bildung des Stator-Tragrings, wobei die Anzahl von vorliegend drei Stator-Sitzflansche entlang der Zentrierachse zur Bildung des innen-umfänglichen Statortragflansches angeordnet werden;
- FIG.7: eine Explosionszeichnung zur weiteren Erläuterung des Einsetzens des Statorträgers mit einem T-förmig an Tragarmen anschließender Brandungszarge in einen in etwa topfförmigen Läuferträger mit einer L-förmig an Tragarmen anschließender Berandungszarge;
- FIG.8: in einer Explosionszeichnung den Vorgang des Anflanschens des Generatorträgers an einen Aufnahmezapfen des Maschinenträgers, wobei der Läuferträger und der Statorträger nur für diesen Montagevorgang mittels einer Hilfsverschraubung temporär aneinander festgemacht sind;
- FIG.9: in einer Explosionszeichnung den Vorgang des Anflanschens des Achszapfens mit Nabenlagerung an den Generatorträger, der am Aufnahmezapfen angesetzt ist, wobei der Stator-Tragflansch beidseitig zwischen dem Aufnahmezapfen und dem Achszapfen eingeflanscht ist;
- FIG.10: eine andere perspektivisch vereinfachte Darstellung des Generator-Tragsystems wie es in Bezug auf FIG.3 erläutert ist;
- FIG.11: eine besonders bevorzugte Darstellung eines Statorträger-Elements in einem Ausschnitt des ersten Stator-Schenkels und mit einem Stator-Sitzflansch - dies analog zu einem Läuferträger-Element;
- FIG.12: in einer Schnittdarstellung entlang der Zentrierachse die eingeflanschten Stator-Sitzflansche zur Bildung eines Stator-Tragflansches zwischen Aufnahmezapfen und Achszapfen eines Generator-Tragsystems wie dies in Bezug auf FIG.6 und FIG.7 dargestellt ist;
- FIG.13: ein Ablaufdiagramm zur Durchführung eines Montageverfahrens für ein Generator-Tragsystem unter Bezug auf die FIG.6 bis FIG.12;
- FIG.14(A): eine Explosionszeichnung zur Darstellung einer Montageabfolge eines Generatorträgers;
- FIG.14(B): eine Schnittdarstellung, ähnlich der FIG.12, entlang der Zentrierachse unter Darstellung eines Stator-Tragflansches mit aneinandergesetzten vollumfänglich verlaufenden Stator-Sitzflanschen und einen Läufer-Tragflanschen mit vollumfänglich verlaufenden aneinandergesetzten Läufer-Sitzflanschen entlang der Zentrierachse, wobei eine Hilfsverschraubung und ein Montageklotz zwischen dem Statorträger und dem Läuferträger erkennbar ist;
- FIG.14(C): eine bereits in FIG.14(B) dargestellte Hilfsverschraubung in Aufsicht;
- FIG.15: eine in FIG.14(B) und (C) gezeigte Hilfsverschraubung, die betreffend den Statorträger durch eine Hauptverschraubung ersetzt ist;
- FIG.16: eine perspektivische Schnittansicht durch einen Stator-Tragflansch und einen Läufertragflansch beim Statorträger und Läuferträger der FIG.16 mit entfernter Hilfsverschraubung un angebrachter Hauptverschraubung.

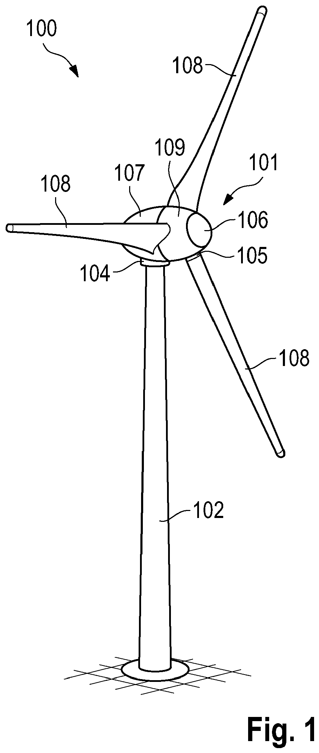

FIG.1 zeigt eine Windenergieanlage 100 in einer perspektivischen Ansicht mit einem Turm 102, einer auf dem Turm 102 angeordneten Gondel 101, die eine Rotornabe 109 mit drei Rotorblättern 108 aufweist. Die Gondel 101 weist weiter eine an die Rotornabe 109 angrenzende hintere Gondelverkleidung 107 auf, die den nicht näher gezeigten nichtrotierenden Teil der Gondel 101 umgibt; also etwa den weiter unten erläuterten Maschinenträger, den Generator, die Leistungselektronik etc.; dabei kann gemäß einer bevorzugten Ausführungsform der Generator auch, mit entsprechend großem Durchmesser, - etwa mit dem äusseren Umfangsbreich des rotierenden Läufers (Aussenläufer) - zwischen Rotornabe 109 und angrenzender hinteren Gondelverkleidung 107 aus der Gondel 101 herausragen.

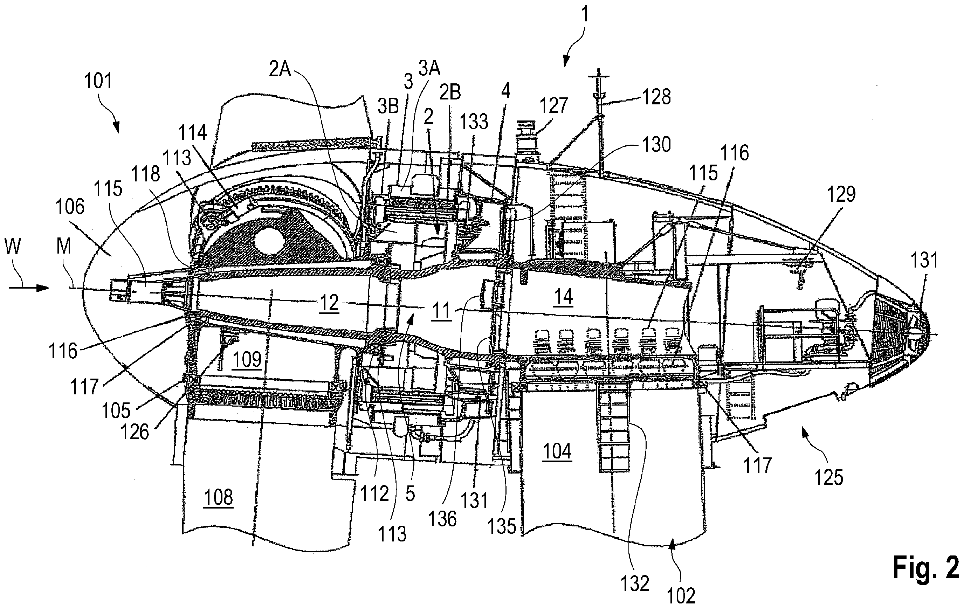

Weiterhin ist eine sogenannte Spinnerverkleidung 106 an der Rotornabe dargestellt, die bestimmungsgemäß entgegen der Windrichtung ausgerichtet ist. Der Bereich der Spinnerverkleidung 106 wird auch als vorderer Teil der Gondel 101 oder vordere Gondelverkleidung bezeichnet. Insofern wird bei der Gondel 101 grundsätzlich zwischen einem vorderen Bereich der Spinnerverkleidung 106, die Rotornabe 109 und einem hinteren Bereich der hinteren Gondelverkleidung 107 unterteilt. Im Bereich der Ansätze der Rotorblätter 108 ist eine Rotorblattwurzel an ein Blattflanschlager 105 angesetzt, das in einer in FIG.2 näher bezeichneten Weise ein Rotorblatt 108 hält.

Der Turm 102 weist einen Kopfflansch 104 auf, auf den ein in FIG.2 näher bezeichneter Maschinenträger 14 aufgesetzt ist, um die in der Gondel 101 untergebrachten Einbauten, insbesondere hier das Generator-Tragsystem 5, den Generator 1 und diverse Leistungselektronik etc. anzubringen und zur Verfügung zu stellen.

Nicht ausführlich gezeigt in FIG.1 sind die üblichen elektrischen Einrichtungen zum Anschluss einer Windenergieanlage an ein öffentliches Netz und die diverse Leistungselektronik, wie Gleichrichter, Gleichstromleiter, Wechselrichter und Transformatoren - diese können je nach Zweckmäßigkeit in der Gondel 101, im Turm 102 oder davon getrennt in einem Schalthaus in unmittelbarer Nähe der Windenergieanlage 100 oder (beispielsweise im Falle eines Windparks oder einer Offshore-Windenergiea-Anlage) in einem Schalthaus untergebracht sein, das vergleichsweise weit von der Windenergieanlage 100 entfernt ist.

FIG.2 zeigt den grundsätzlichen Aufbau und die Einbauten der Gondel 101, die dazu in einer Schnittansicht entlang eines Längsschnittes gezeigt ist; entlang einer Achse M, welche im wesentlichen einer Windanströmrichtung W entspricht. Die in FIG.2 gezeigten Einbauten und Anbauten der Gondel 101 weisen im Wesentlichen die folgenden Elemente auf: ein Rotorblatt 108, ein Blattflanschlager 105, ein Blattverstellgetriebe 113, einen Blattverstellmotor 114, einen Schleifringkörper 115, einen Achsdeckel 116, einen vorderen Lagerdeckel 117, ein zweireihiges Kegelrollenlager 118, die vorgenannte Rotornabe 109. Der Schleifringkörper 115 ist vorliegend innerhalb der Spinnerverkleidung 106 untergebracht.

Ein Generator-Tragsystem 5 weist einen Achszapfen 12 einen Aufnahmezapfen 11 und einen Maschinenträger 14 am Kopfflansch 104 des Turms 102 auf. Außerdem ist ein Zylinderrollenlager 112, ein hinterer Lagerdeckel 113 und eine Azimutlagerung erkennbar mit einem Azimutmotor 115, einem Azimutgetriebe 116, einem Azimutlager 117 sowie den vorgenannten Turm 102 mit dem vorgenannten Kopfflansch 104 auf.

Die Gondel 101 weist darüber hinaus eine Zentralschmieranlage 126, eine Flugbefeuerung 127 und einen Kombi-Windgeber 128 auf. Über einen Elektrokettenzug 129 kann durch eine Lastenöffnung 125 darunter Zubehör in die Gondel 101 transportiert werden beziehungsweise aus dieser herausgebracht werden; eine Traglast des Elektrokettenzugs liegt beispielsweise bei 250 Kilogramm.

Die Gondel 101 kann unter anderem über den Turm 102, nämlich über eine Einstiegsleiter 132 betreten werden, die vom Turm 102 zur Gondel 101 reicht. Dazu ist eine nicht näher bezeichnete Einstiegsöffnung durch den Kopfflansch 104 des Turms 102 vorgesehen.

Zur Belüftung der Gondel 101 weist diese einen Gondellüfter 130 und einen passiven Hecklüfter 131 auf.

Der Achszapfen, Aufnahmezapfen und Maschinenträger 10, 11, 14 dient als Generator-Tragsystem zum Aufnahmen und Tragen eines im Folgenden näher erläuterten Generators 1. Der Generator 1 ist vorliegend als Ring-Generator in Form eines langsam laufenden Synchrongenerators ausgebildet. Der Läufer 2 des Generators 1 kann relativ zum Stator mittels einer elektromagnetischen Bremszange 131 und einer Arretierung 133 festgesetzt werden; z.B. um zu Sevicezwecken .den Läufer 3 relativ zum Stator 2 festzusetzen.

Der in FIG.2 gezeigte Generator 1 ist als ein Ring-Generator mit einem Läufer 3 und einem Stator 2 gebildet. Der Läufer 3 weist einen Läuferträger 3A auf, an dem eine Läuferwicklung 3B an Polpaketen aufgebracht ist. Der Stator 2 weist einen Statorträger 2A auf, an dem eine Stator-Wicklung 2B auf Statorpaketen aufgebracht ist. Der Stator 2 ist mittels einer Statorglocke 4 am Aufnahmezapfen 11 festgemacht, welcher wiederum am Maschinenträger 14 angebracht ist. Der Läufer 3 ist mit der Rotornabe 109 verbunden und dreht sich mit dieser, wobei die Rotornabe 109 mittels der genannten Kegelrollenlager 118 und Zylinderrollenlager 112 auf dem Achszapfen 12 drehend gelagert ist. Der Generator 1 ist somit als ein Außenläufergenerator mit innenliegendem Stator und außenliegendem Rotor 2, 3 gebildet. Die Anordnung eines Maschinenträgers 14 mit angeflanschtem Aufnahmezapfen und Achszapfen 11, 12 bildet insofern ein am Kopfflansch 104 des Turms 102 angebrachtes Generator-Tragsystem 5 für den Generator 1 beziehungsweise mit dem Generator 1. Der Läuferträger 3A ist insofern mittelbar vom Achszapfen 12 getragen; der Statorträger 2A ist insofern unmittelbar vom Aufnahmezapfen 11 getragen.

Das Generator-Tragsystem 5 ist vorliegend hohl ausgebildet und entlang einer Mittenachse M angeordnet. Die Mittenachse M bildet insofern eine Rotationsachse für den Läufer 3 und eine mittige Achse für den Achszapfen 12, den Aufnahmezapfen 11 und den Maschinenträger 14. Außerdem ist im Aufnahmezapfen ein Einsatz 135 mit einem Gebläse 136 im Aufnahmezapfen 11 vorgesehen. Das Gebläse 136 kann somit die Luft in den Innenraum des Generator-Tragsystems 5 aus Maschinenträger 14, Aufnahmezapfen 11 und Achszapfen 12 bewegen.

Das Generator-Tragsystem 5 mit dem Generator 1 ist als Tragsystem 10 mit dem Generator 1 auf dem Maschinenträger 14 mit Aufnahmezapfen 11 und Achszapfen 12 gezeigt. Die auf dem Achszapfen 12 gelagerte Rotornabe 109 ist dabei mit den Blattflanschlagern 105 für die Rotorblätter 108 des Rotors erkennbar.

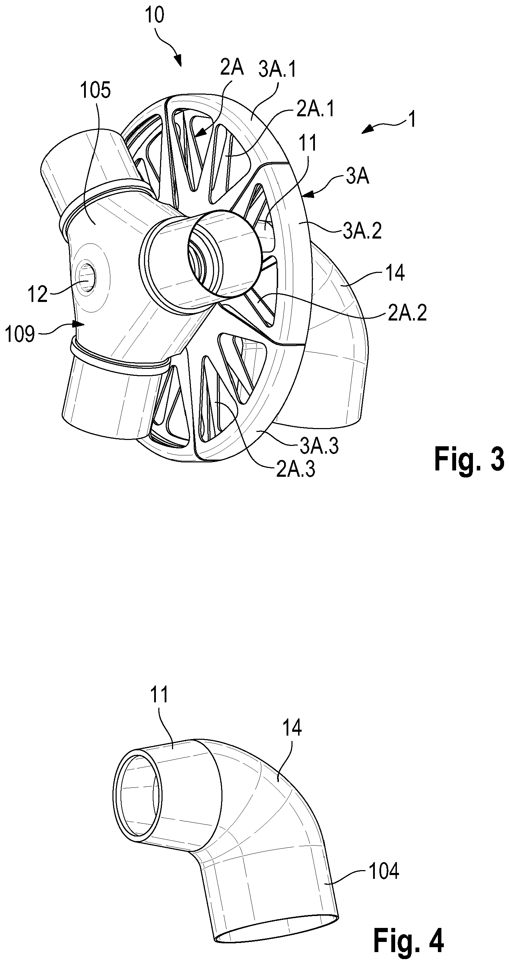

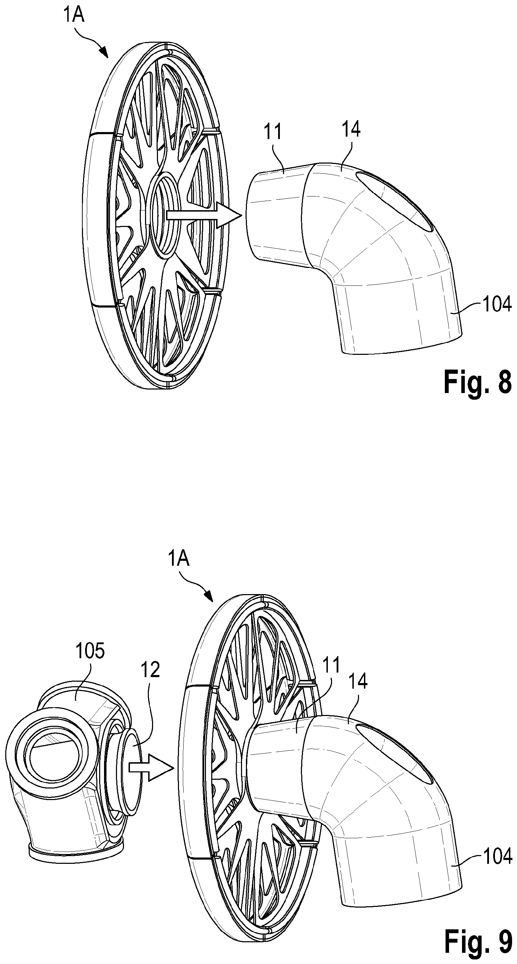

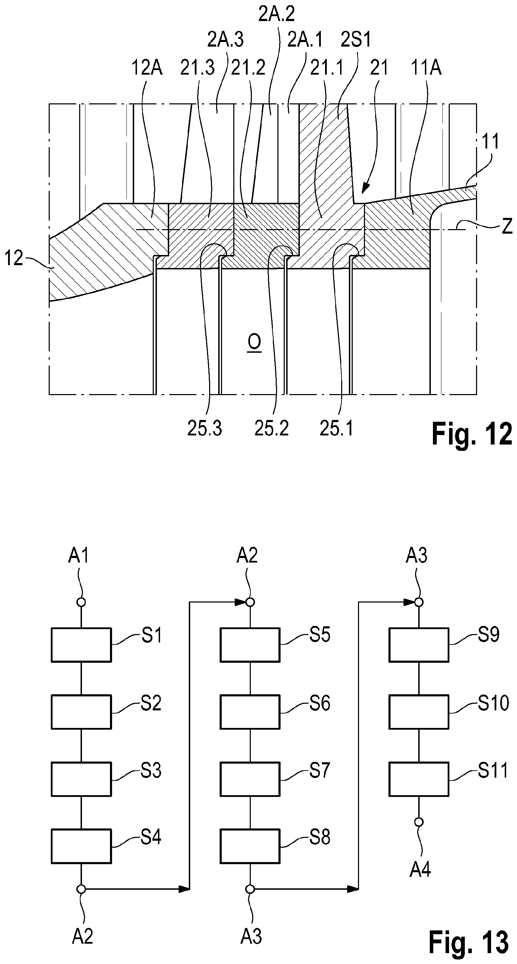

Des Weiteren ist erkennbar, dass der Generator 1 mit Läufer 3 und Stator 2 mit dem zugeordneten Statorträger 2A und Läuferträger 3A dargestellt ist. Jeder der Träger 2A, 3A ist mit einer in FIG.3 näher dargestellten Anzahl von Stator-Trägerelementen 2A.1, 2A.2, 2A.3 beziehungsweise Läuferträger-Elementen 3A.1, 3A.2, 3A.3 gebildet. Dieser Aufbau ist im Einzelnen anhand der folgenden FIG.4 bis FIG.7 grundsätzlich erläutert; Details sind in Bezug auf FIG.8 bis FIG.12 erläutert. Ein Montageverfahren für den Generatorträger ist in FIG.13 bis FIG.16 erläutert.

Im Einzelnen zeigt dazu FIG.3 und FIG.4 den Kopfflansch 104 des Turms 102 mit darauf aufgesetztem Maschinenträger 14 und daran angeflanschten Aufnahmezapfen 11. Der Aufnahmezapfen 11 ist insofern stirnseitig des Maschinenträgers 14 angeflanscht.

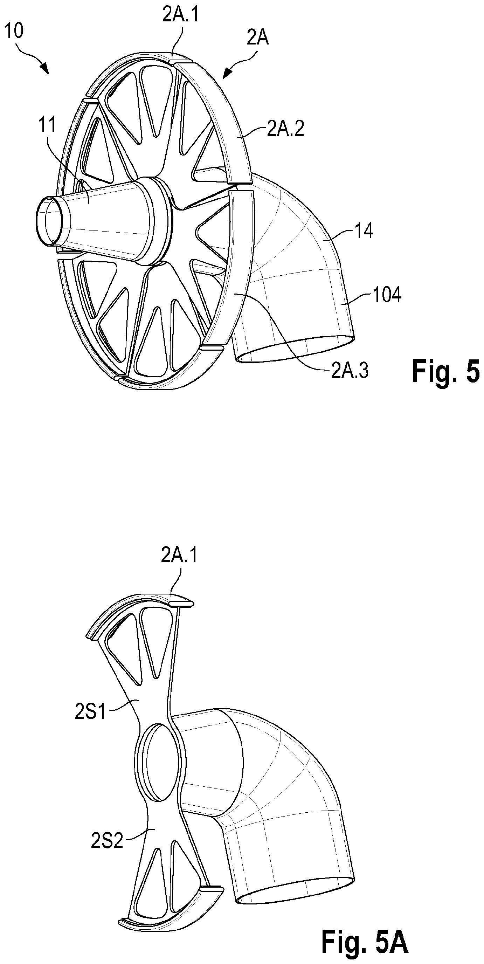

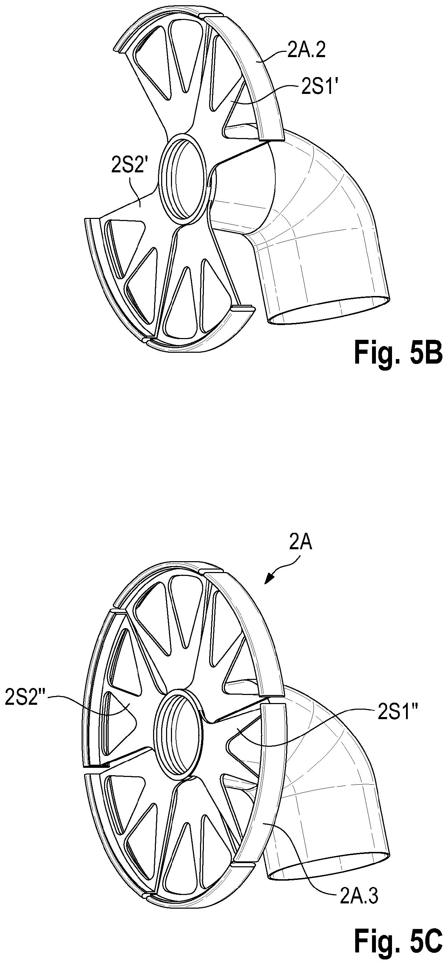

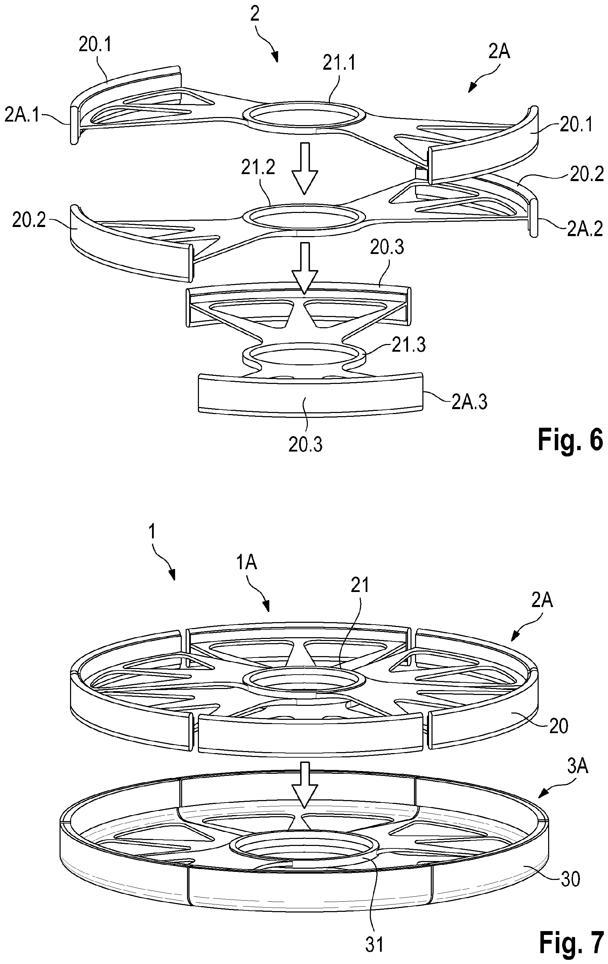

Wie aus FIG.5 ersichtlich, ist zwischen dem Aufnahmezapfen 14 und dem Achszapfen 11 beidseitig der Statorträger 2A eingeflanscht, wobei sofort die Anzahl von vorliegend drei Statorträger-Elementen 2A.1, 2A.2, 2A.3 ersichtlich ist, die verdreht zueinander angeordnet sind. Ganz ähnlich sind, wie aus FIG.3 bereits ersichtlich, die Anzahl von vorliegend drei Läuferträger-Elementen 3A.1, 3A.2, 3A.3 verdreht zueinander angeordnet. Ganz ähnlich zeigt FIG.6 das Zusammensetzen von Läuferträger-Elementen 3A.1, 3A.2 und 3A.3.

Betreffend den Statorträger 2A ist dies im Einzelnen anhand der Sequenz von FIG.5A, FIG.5B, FIG.5C näher erläutert. Wie in FIG.5A gezeigt, ist zunächst auf einer sechs bis zwölf Uhr-Position ein erstes Statorträger-Element 2A.1 mit einem ersten Stator-Schenkel 2S1 und einem zweiten Stator-Schenkel 2S2, jeweils einen Winkel von 60° überdeckend, angeordnet. Auf einer um weitere 60° verdrehten Uhren-Position der weiteren Stator-Schenkel 2S1', 2S2' ein baugleiches zweites Statorträger-Element 2A.2 angesetzt und wie aus FIG.5C ersichtlich, ist ein drittes baugleiches Statorträger-Element 2A.3 auf einer vier bis elf Uhr-Position der noch weiteren Stator-Schenkel 2S1", 2S2" angesetzt.

Das Einlegen des Statorträgers 2A des Stators 2 in den Läuferträger 3A des Läufers 3 zur Bildung des Generatorträgers 1A für einen Generator 1 ist in FIG.7 gezeigt.

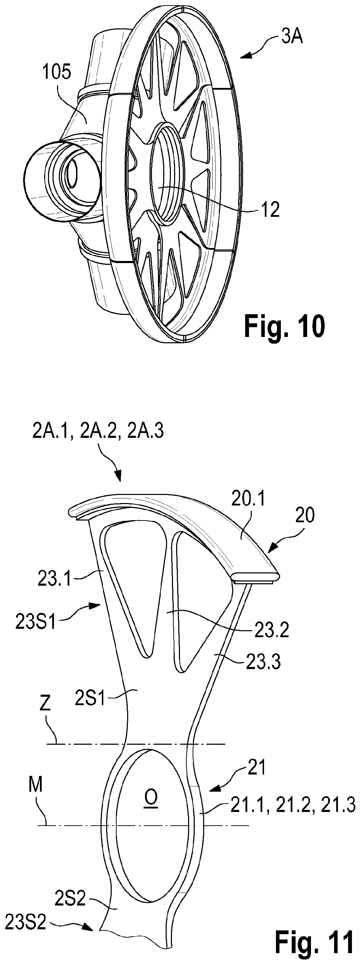

Der so gebildete Generatorträger 1A ist gemäß FIG.8 vor den Aufnahmezapfen 11 geflanscht und gemäß FIG.9 zwischen dem Aufnahmezapfen 11 und dem Achszapfen 12 mit der Rotornabe 105 eingeflanscht. Die Rotornabe 105 ist mit gelagertem Achszapfen 12 und daran angebrachtem Außenläuferträger 3A in FIG.10 gezeigt.

FIG.11 zeigt im Einzelnen den Aufbau eines Statorträger-Elements 2A.1, 2A.2, 2A.3, wobei diese Statorträger-Elemente 2A.1, 2A.2, 2A.3 praktisch baugleich gebildet sind. FIG.11 ist auch exemplarisch für den Aufbau eines Läuferträger-Elements 3A.1, 3A.2, 3A.3, wobei diese Läuferträger-Elemente 3A.1, 3A.2, 3A.3 praktisch baugleich gebildet sind und von den Statorträger-Elementen 2A.1, 2A.2, 2A.3 - wie in FIG.7 erkennbar - im wesentlichen nur in der Ausbildung des Läufer-Tragrings 30 im Vergleich zum Stator-Tragring 20 abweicht.

Jedes der Statorträger-Elemente 2A.1, 2A.2, 2A.3 bzw. analog die Läuferträger-Elemente 3A.1, 3A.2, 3A.3 ergibt sich damit wie folgt.

Das in FIG.11 gezeigte Statorträger-Element 2A.1, 2A.2, 2A.3 ist als eines von drei baugleichen Statorträger-Elementen für einen Statorträger 2A eines Ring-Generators 1 ausgebildet, wobei zur Bildung des Satorträgers 2A die genannten Anzahl von Statorträger-Elementen 2A.1, 2A.2, 2A.3 über eine im Wesentlichen durch den Generatorquerschnitt bestimmte Generatorfläche zusammengesetzt werden. Konkret entspricht eine Statorfläche in etwa der Kreisfläche, wie sie durch die Berandung des Stators 2 oder der Fläche des Statorträgers 2A entspricht, beispielsweise wie vor allem in FIG.7 ersichtlich. Der Statorträger 2A weist, wie vor allem in FIG.7 ersichtlich, einen außen-umfänglichen Stator-Tragflansch 20 zur Anbringung einer in FIG.7 und FIG.2 bezeichneten Stator-Wicklung 2B auf. Der Statorträger 2A weist außerdem einen innen-umfänglichen Stator-Tragflansch 21 auf, der zur Anbringung eines Aufnahmezapfens 11 am Maschinenträger 14 ausgebildet ist. Der Läuferträger 3A weist, wie vor allem in FIG.7 ersichtlich, einen außen-umfänglichen Läufer-Tragflansch 30 zur Anbringung einer in FIG.7 und FIG.2 bezeichneten Läufer-Wicklung 3B auf. Der Läuferträger 3A weist außerdem einen innen-umfänglichen Läufer-Tragflansch 31 auf, der zur Durchführung und Lagerung auf einem Achszapfen 12 ausgebildet ist.

Das nun in FIG.11 teilweise gezeichnete Statorträger-Element 2A.1, 2A.2, 2A.3 - analog ein Läuferträger-Element 3A.1, 3A.2, 3A.3 mit einer entsprechenden Bezeichnung der für einen Läufer 3 spezifischen Merkmale - weist außerdem folgende Elemente auf: einen ersten Stator-Schenkel 2S1, der einen ersten Flächensektor, der einer zuvor erläuterten Generatorfläche zugeordnet ist, wobei der Flächensektor im Wesentlichen durch die äußere Berandung des ersten Schenkels 2S1 gebildet ist. Der erste Stator-Schenkel 2S1 ist zum Zusammensetzen des Stator-Tragrings 20 ausgebildet. Des Weiteren weist das Statorträger-Element einen zweiten Stator-Schenkel 2S2 auf, der in FIG.11 nur teilweise gezeigt ist. Dieser ist einem zweiten Flächensektor der Generatorfläche zugeordnet und ebenfalls zum Zusammensetzen des Stator-Tragrings 20 ausgebildet. Sowohl der erste Stator-Schenkel 2S1 als auch der zweite Stator-Schenkel 2S2 sind an einem der innen-vollumfänglich verlaufenden Stator-Sitzflansche 21.1, 21.2, 21.3 angeschlossen, wobei die Zusammenschau der Stator-Sitzflansche 21.1, 21.2, 21.3 mit den Statorträger-Element 2A.1, 2A.2, 2A.3 in FIG.6 gezeigt ist. In diesem Fall sind die Stator-Schenkel 2S1, 2S2 einstückig jeweils an dem Stator-Sitzflansch 21.1 des Statorträger-Elements 2A.1 beziehungsweise dem Stator-Sitzflansch 21.2 des Statorträger-Elements 2A.2 beziehungsweise dem Stator-Sitzflansch 21.3 des Statorträger-Elements 2A.3 angeschlossen. Der Stator-Sitzflansch 21.1 ist mit den weiteren Stator-Sitzflanschen 21.2, 21.3 wie in FIG.6 gezeigt zum Zusammensetzen des Stator-Tragflansches 21 ausgebildet.

Um den Stator-Tragring 20 wie erläutert zusammenzusetzen, ist nun vorliegend jedes der Statorträger-Elemente 2A.1, 2A.2, 2A.3 mit den genannten ersten und zweiten Stator-Schenkel 2S1, 2S2 ausgestattet, die hier der Einfachheit halber für jedes der Statorträger-Elemente 2A.1, 2A.2, 2A.3 gleich bezeichnet sind. Der erste Stator-Schenkel 2S1 weist einen ersten radial verlaufenden Stator-Tragarm 23S1 auf, wobei vorliegend drei Speichen des Stator-Tragarms gebildet sind, die mit 23.1, 23.2, 23.3 bezeichnet sind. Der zweite Stator-Schenkel 2S2 weist einen zweiten radial verlaufenden Stator-Tragarm 23S2 auf, wobei vorliegend nicht gezeigte drei Speichen des Stator-Tragarms gebildet sind, die hier auch mit 23.1, 23.2, 23.3 bezeichnet sind.

Am ersten Stator-Tragarm 23S1 schließt, vorliegend wiederum einstückig, ein erstes außen-umfänglich verlaufendes Stator-Tragring-Segment 20.1 an, das bei den anderen Statorträger-Elementen 2A.2, 2A.3 entsprechend mit 20.2, 20.3 bezeichnet ist. Die Stator-Tragring-Segmente 20.1, 20.2, 20.3 dienen zur Bildung des Stator-Tragrings 20. Entsprechend weist der zweite Stator-Schenkel 2S2 einen zweiten radial verlaufenden, nicht weiter gezeigten Stator-Tragarm 23S2 auf und ein am zweiten Stator-Tragarm 23S2 auch vorliegend einstückig anschließendes zweites außen-umfänglich verlaufendes Stator-Tragring-Segment 20.1 zur Bildung des Stator-Tragrings 20. Auch diese der Einfachheit gleich bezeichneten und in FIG.11 nicht gezeigten Stator-Tragring-Segmente 20.1, 20.2, 20.3 dienen zur Bildung des Stator-Tragrings 20.

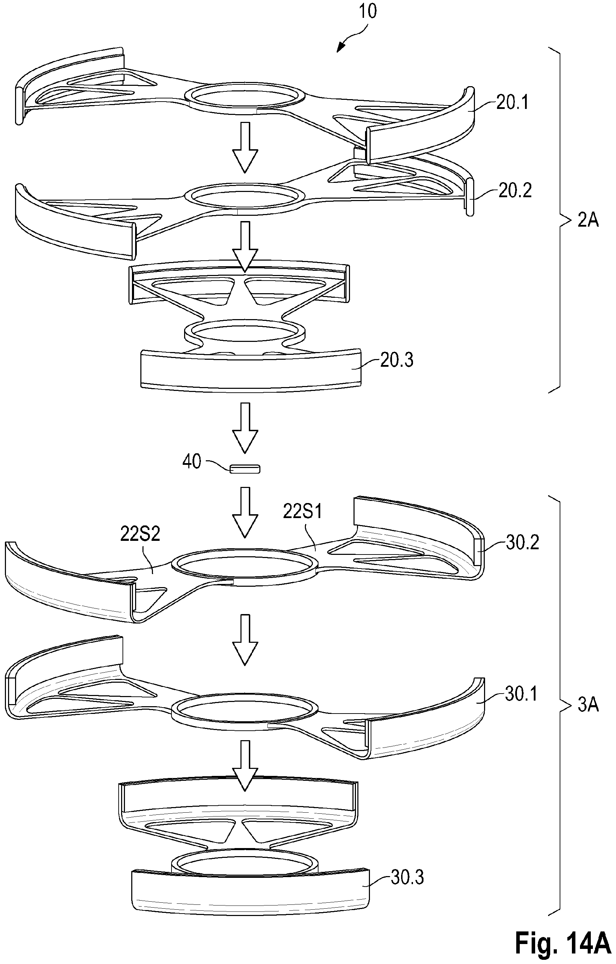

Mit anderen Worten wird ein erster und ein zweiter Stator-Tragarm 23 in Form eines den ersten und zweiten Flächensektor überdeckenden flachen Speichenteils mit den Speichen 23.1, 23.2, 23.3 gebildet. An dem ersten und zweiten Stator-Tragarm 23 ist jeweils ein Stator-Tragring-Segment 20.1, 20.2, 20.3 angesetzt. Ein Stator-Tragring-Segment 20.1, 20.2, 20.3 ist in Form einer Brandungszarge gebildet und, wie in FIG.11 erkennbar, im Querschnitt T-förmig mittig einstückig angeschlossen. Für den Läuferträger 3A gilt Ähnliches, wobei wie aus FIG.14(A) ersichtlich, an den ersten und zweiten Läufer-Tragarm 22S1, 22S2 ein Läufer-Tragring-Segment in Form einer Brandungszarge im Querschnitt L-förmig mittig und einstückig anschließt.

Zur Bildung des Stator-Tragrings 20 wird nun unter verdrehter Anordnung der drei genannten Statorträger-Elemente 2A.1, 2A.2, 2A.3 und damit unter umfänglichem Versatz der unterschiedlichen je zwei Stator-Tragring-Segmente 20.1, 20.2, 20.3 der Stator-Tragring 20 gebildet - nämlich wie in der Explosionszeichnung FIG.6 zu sehen.

Zur Bildung des Läufer-Tragrings 30 wird nun unter verdrehter Anordnung der drei genannten Läuferträger-Elemente 3A.1, 3A.2, 3A.3 und damit unter umfänglichem Versatz der unterschiedlichen je zwei Läufer-Tragring-Segmente 30.1, 30.2, 30.3 der Läufer-Tragring 30 gebildet - nämlich wie in der Explosionszeichnung FIG.14(A) zu sehen.

Des Weiteren ist, wie in FIG.12 im Detail dargestellt, zur Bildung des Stator-Tragflansches vorgesehen, dass der erste Stator-Tragarm 23S1 und der zweite Stator-Tragarm 23S2 wie erläutert an dem innen-vollumfänglich verlaufenden Stator-Sitzflansch 21.1 beziehungsweise 21.2 beziehungsweise 21.3 entsprechend den Statorträger-Elementen 2A.1, 2A.2, 2A.3 anschließen. Dabei umgibt der Stator-Sitzflansch 21.1, 21.2, 21.3 eine mit O bezeichnete zentrale Öffnung, die entlang einer Zentrierachse Z, parallel zu einer mittigen Mittenachse M, zur Aufnahme des Aufnahmezapfens 11 dient. Dabei kann der Aufnahmezapfen 11 innerhalb der Öffnung O verlaufen oder aber - wie in FIG.12 als bevorzugte Ausführungsform gezeigt - an den Stator-Tragflansch 21 auf einer Seite stirnseitig anschließen.

Dementsprechend ist in FIG.12 an der dort rechten Stirnseite des Stator-Tragflansches 21 der Anschlussflansch 11A des Aufnahmezapfens 11 gezeigt und in FIG.12 auf der dort linken Stirnseite des Stator-Tragflansches 21 der Aufnahmeflansch 12A des Achszapfens 12 gezeigt.

Der Stator-Tragflansch 21 setzt sich nun zusammen aus einer Abfolge von entlang der Zentrierachse Z (parallel zur mittigen Mittenachse M) angeordneten Stator-Sitzflanschen 21.1, 21.2, 21.3 der diese Stator-Sitzflansche 21.1, 21.2, 21.3 ausbildenden Statorträger-Elemente 2A.1, 2A.2 und 2A.3. Von diesen ist vorliegend im Querschnitt jedenfalls der erste Stator-Schenkel 2S1 wie zuvor erläutert erkennbar.

Somit sind die innen-umfänglich verlaufenden Stator-Sitzflansche 21.1, 21.2, 21.3 unter axialem Versatz entlang der Zentrierachse Z zur Bildung des Stator-Tragflansches 21 bereits an einem Statorträger-Element 2A.1, 2A.2, 2A.3 angeformt.

Um die Stator-Sitzflansche 21.1, 21.2, 21.3 gegeneinander zu zentrieren, weist jeder derselben einen Zentrieransatz vorliegend in Form einer umfänglich verlaufenden Zentrierstufe 25.1, 25.2, 25.3 auf. Die Zentrierstufe 25.1, 25.2, 25.3 hat damit einen in FIG.12 erkennbaren äußeren Radialschnitt entlang der Zentrierachse Z und eine umfänglich verlaufenden Zentrieransatzfläche am Ort der Bezeichnung 23.1, 23.2, 23.3. Anders ausgedrückt verläuft die Zentrieransatzfläche 25.1, 25.2, 25.3 in Richtung der Zentrierachse Z. Die davon abgehenden Stufenflächen entlang des Radius eines Stator-Sitzflansches 21.1, 21.2, 21.3 führen über auf einen weiteren erkennbaren inneren Radialschnitt entlang der Zentrierachse Z. Vorliegend ist die Zentrieransatzfläche der Zentrierstufe 25.1, 25.2, 25.3 in einem abgewinkelten Teil zur Zentrierachse Z angefast. Dies ermöglicht eine vereinfachtes Aufeinandersetzen und damit Zentrieren beim Aufeinanderlegen der Statorträger-Elemente 2A.1, 2A.2, 2A.3 in dieser Reihenfolge auf den Anschlussflansch 11A des Aufnahmezapfens 11 und das anschließende Aufsetzen des Aufnahmeflansch 12A des Achszapfens 12 wie dies im Schnitt in FIG.12 gezeigt ist.

Wie in FIG.11 weiter ersichtlich ist, liegen sich also der erste Flächensektor der Generatorfläche zur Bildung des Stator-Tragrings 20 mit dem ersten Stator-Schenkel 2S1 und der zweite Flächensektor der Generatorfläche zur Bildung des Stator-Tragrings 20 mit dem zweiten Stator-Schenkel 2S2 in einer Scheitelwinkelanordnung gegenüber. Vorliegend ist darüber hinaus vorgesehen, dass ein erster Stator-Tragarm 23.1 und ein zweiter Stator-Tragarm 23.1 des zweiten Schenkels 2S2 sich diametral gegenüber. Entsprechend gilt dies für sich diametral gegenüberliegende Stator-Tragarme 23.2 der Schenkel 2S1, 2S2 und die Stator-Tragarme 23.3 der Schenkel 2S1, 2S2.

Des Weiteren ist ein Läuferträger-Element 3A.1, 3A.2, 3A.3 mit einer entsprechenden Bezeichnung der für einen Läufer 3 spezifischen Merkmale wie zuvor erläutert analog einem Statorträger-Element 2A.1, 2A.2, 2A.3 der FIG.11 und FIG.12 aufgebaut.

FIG.13 zeigt in einem Ablaufschema die grundsätzlichen Verfahrensschritte zur Montage eines Generator-Tragsystems 5 auf, wie dies bereits aus FIG.2 und FIG.3 und den weiteren FIG.'s erkennbar ist.

Das Montageverfahren sieht damit in einem ersten Schritt S1 vor, dass der Statorträger als ein mehrelementiger Statorträger 2A mit einer Anzahl von Statorträger-Elementen 2A.1, 2A.2, 2A.3 wie im Detail anhand von FIG.11 und FIG.12 erläutert, zusammengesetzt wird. Des Weiteren wird in einem weiteren Schritt S2 der Läuferträger als mehrelementiger Läuferträger 3A mit einer Anzahl von Läuferträger-Elementen 3A.1, 3A.2, 3A.3 - wie dies anhand von FIG.14(A) ersichtlich ist - zusammengesetzt.

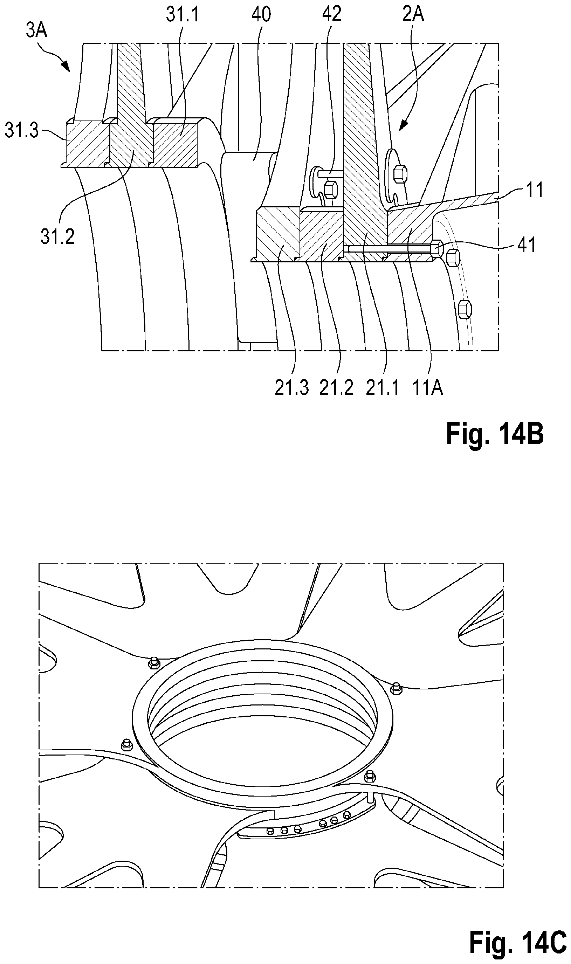

Wie in FIG.7 und FIG.14(A) ersichtlich, wird somit zunächst ein System aus einem mehrelementigen Statorträger 2A und einem mehrelementigen Läuferträger 3A gebildet zur Darstellung eines mehrelementigen Generatorträgers 10. Dieser Generatorträger ist gemäß dem Schritt S3 so ausgestaltet, dass der Statorträger 2A und der Läuferträger 3A über einen Montageklotz 40 verbunden sind, der in FIG.14(B) gezeigt ist.

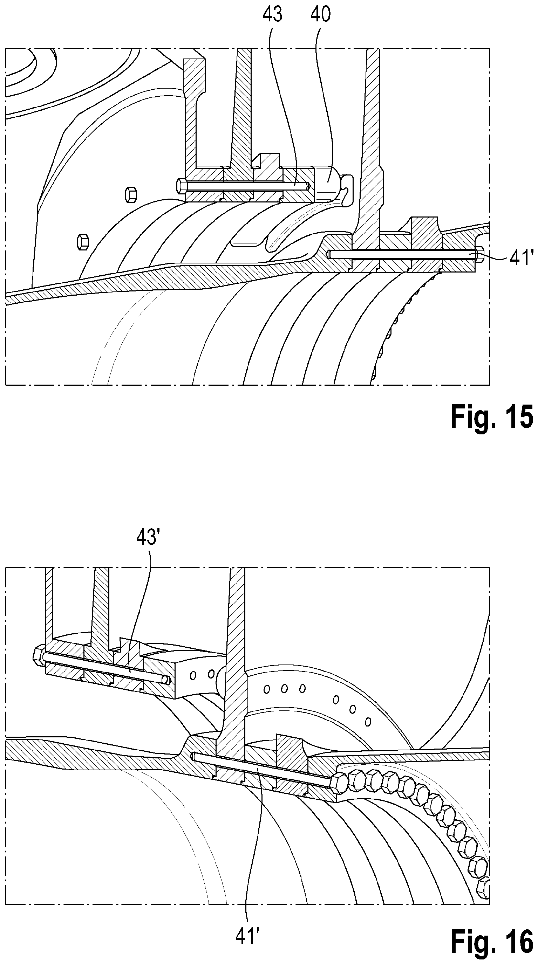

In einem in FIG.14(B) dargestellten Verfahrensschritt S4 wird auch der mehrelementige Statorträger 2A zunächst über eine Fixierschraube 41 am Anschlussflansch 11A des Aufnahmezapfens 11 befestigt. Die Statorträger-Elemente 2A.1, 2A.2, 2A.3 , die in FIG.14(B) über ihre Stator-Sitzflansche 21.1., 21.2., 21.3 erkennbar sind, sind über eine Montageverschraubung 42 zueinander fixiert und am Montageklotz 40 gehalten, ebenso wie die Läuferträger-Elemente 3A.1, 3A.2, 3A.3 erkennbar über Läufer-Sitzflansche 31.1, 31.2., 31.3 über die Hilfsverschraubung 42 am Montageplatz 40 gehalten sind - dies ist auch erkennbar in FIG.15 und in der Aufsicht der FIG.14(C).

Das so fixierte System eines Generatorträgers 1A wird sodann in einem weiteren Schritt S5 in der aus FIG.8 ersichtlichen Weise mit dem Stator-Tragflansch 21 mit dessen einer Stirnseite an den Aufnahmezapfen 11 angesetzt. Anschließend wird in einem weiteren Schritt S6, wie in FIG.9 und FIG.12 ersichtlich, die Rotornabe 105 mit dem Achszapfen 12 an den Stator-Tragflansch 21 an dessen anderer Stirnseite angesetzt. Schließlich werden, wie in FIG.10 ersichtlich, in einem weiteren Schritt S7 die Rotorblätter 108 des Rotors an die Rotornabe 105 angesetzt, sodass im Ergebnis eine Konstruktion, wie sie assembliert in FIG.3 als Generator-Tragsystem 5 erkennbar ist, realisiert ist.

Es wird aber in einem weiteren Schritt S8 die in FIG.15 erkennbare Hilfsverschraubung für den Stator 2 beziehungsweise den Statorträger 2A zunächst durch eine Betriebsverschraubung 41' ersetzt, die in FIG.15 und FIG.16 gezeigt ist. Außerdem wird in einem Schritt S9 die Hilfsverschraubung 42 und der Montageklotz 40 entfernt. Schließlich wird in einem weiteren Schritt S10 die Hilfsverschraubung 43 ersetzt durch eine Betriebsverschraubung 43' für den Läufer, die in FIG.16 gezeigt ist.

Damit entsteht schließlich das betriebsfertige Generatorsystem auf Grundlage des Generator-Tragsystems 5 der FIG.3 für eine Windenergieanlage der FIG.1 und FIG.2 in einem Schritt S11.

## Patentansprüche

1. Trägerelement für einen Träger eines Ring-Generators (1), insbesondere Stator-träger-Element (2A.1, 2A.2, 2A.3) für einen Statorträger (2A) eines Ring-Generators und/oder Läuferträger-Element (3A.1, 3A.2, 3A.3) für einen Läuferträger (3A) eines Ring-Generators, wobei zur Bildung des Trägers eine Anzahl von Trägerelementen über eine Generatorfläche zusammengesetzt werden und welcher Träger mit einem außen-umfänglichen Tragring (20,30) zur Anbringung einer Wicklung und mit einem innen-umfänglichen Tragflansch (21, 31), der zur Vermittlung zu einem Zapfen (11) zur Verbindung mit einem Maschinenträger (14) ausgebildet ist, wobei das Trägerelement aufweist:
- einen ersten Schenkel (2S1, 22S1), der einem ersten Flächensektor der Generatorfläche zugeordnet und zum Zusammensetzen des Tragrings ausgebildet ist,
- einen zweiten Schenkel (2S2, 22S2), der einem zweiten Flächensektor der Generatorfläche zugeordnet und zum Zusammensetzen des Tragrings (20, 30) ausgebildet ist, **dadurch gekennzeichnet, dass**
- der erste Schenkel und der zweite Schenkel an einem innen-vollumfänglich verlaufenden Sitzflansch (21.1, 21.2, 21.3, 31.1, 31.2, 31.3) einstückig anschließen, der zum Zusammensetzen des Tragflansches (21, 31) ausgebildet ist.

2. Statorträger-Element (2A.1, 2A.2, 2A.3) nach Anspruch 1, **dadurch gekennzeichnet, dass**
- der erste Stator-Schenkel (2S1) einen ersten radial verlaufenden Stator-Tragarm (23S1) und ein am ersten Stator-Tragarm, einstückig anschließendes erstes außen-umfänglich verlaufendes Stator-Tragring-Segment zur Bildung des Stator-Tragrings aufweist, und
- der zweite Stator-Schenkel (2S2) einen zweiten radial verlaufenden Stator-Tragarm (23S2) und ein am zweiten Stator-Tragarm, einstückig anschließendes zweites außenumfänglich verlaufendes Stator-Tragring-Segment zur Bildung des Stator-Tragrings aufweist, und/oder
- unter verdrehter Anordnung unterschiedlicher Statorträger-Elemente (2A.1, 2A.2, 2A.3) und damit unter umfänglichem Versatz unterschiedlicher Stator-Tragring-Segmente (20.1, 20.2, 20.3) der Stator-Tragring (20) zu bilden ist.

3. Statorträger-Element nach einem der Ansprüche 1 oder 2, **dadurch gekennzeichnet, dass**
- der erste Stator-Tragarm und der zweite Stator-Tragarm an dem innen-vollumfänglich verlaufenden Stator-Sitzflansch einstückig anschließen, wobei der Stator-Sitzflansch vollumfänglich eine Öffnung umgibt, die entlang einer Zentrierachse zur Aufnahme des Aufnahmezapfens dient, und/oder
- der Stator-Sitzflansch zur Bildung des innen-umfänglichen Stator-Tragflansches mit einer Anzahl von Stator-Sitzflanschen entlang der Zentrierachse anzuordnen ist, wobei unter axialem Versatz der Anzahl von Stator-Sitzflanschen entlang der Zentrierachse der Stator-Tragflansch zu bilden ist.

4. Statorträger-Element nach wenigstens einem der Ansprüche 1 bis 3, **dadurch gekennzeichnet, dass**
- der Stator-Sitzflansch einen Zentrieransatz aufweist, der ausgebildet ist, den Stator-Sitzflansch des Statorträger-Elements an einem entlang der Zentrierachse axial versetzten und benachbarten anderen Stator-Sitzflansch der Anzahl von Stator-Sitzflanschen zu zentrieren, zur Bildung des Stator-Tragflansches, und/oder
- der Zentrieransatz mit einer umfänglich entlang des Stator-Sitzflansches verlaufenden Zentrierstufe gebildet ist, die eine umfänglich und entlang der Zentrierachse verlaufende Zentrieransatzfläche sowie eine erste und zweite daran anschließende umfänglich und radial verlaufende Stirn-Anschlagfläche aufweist.

5. Statorträger-Element nach wenigstens einem der Ansprüche 1 bis 4, **dadurch gekennzeichnet, dass** sich der erste Flächensektor der Generatorfläche zur Bildung des Stator-Tragrings mit dem ersten Stator-Schenkel (2S1) und der zweite Flächensektor der Generatorfläche zur Bildung des Stator-Tragrings mit dem zweiten Stator-Schenkel (2S2) in einer Scheitelwinkel-Anordnung gegenüberliegen, insbesondere,
- dass sich ein erster Stator-Tragarm und ein zweiter Stator-Tragarm diametral gegenüberliegen.

6. Statorträger-Element nach wenigstens einem der Ansprüche 1 bis 5, **dadurch gekennzeichnet, dass**
- ein erster und zweiter Stator-Tragarm in Form eines den ersten und zweiten Flächensektor überdeckenden Flachteils, insbesondere Speichen-Teils, gebildet ist und/oder
- an den ersten und zweiten Stator-Tragarm ein Stator-Tragring-Segment in Form einer Berandungszarge im Querschnitt T-förmig anschließt, insbesondere mittig anschließt.

7. Statorträger-Element nach wenigstens einem der Ansprüche 1 bis 6, **dadurch gekennzeichnet, dass** der Stator-Sitzflansch
- umfänglich angeordnete erste Öffnungen aufweist, zur Aufnahme von zur Anbringung und Wiederentfernung vorgesehenen Montageschrauben als Hilfsverschraubung, und
- umfänglich angeordnete zweite Öffnungen aufweist, zur Aufnahme von zur Anbringung und Verbleiben vorgesehenen Betriebsschrauben als Hauptverschraubung.

8. Läuferträger-Element (3A.1, 3A.2, 3A.3) nach Anspruch 1, **dadurch gekennzeichnet, dass**
- der erste Läufer-Schenkel (22S1) einen ersten radial verlaufenden Läufer-Tragarm (22S1) und ein am ersten Läufer-Tragarm, einstückig anschließendes erstes außen-umfänglich verlaufendes Läufertragring-Segment zur Bildung des Läufer-Tragrings aufweist, und
- der zweite Läufer-Schenkel (22S2) einen zweiten radial verlaufenden Läufer-Tragarm (22S2) und ein am zweiten Läufer-Tragarm, einstückig, anschließendes zweites außen-umfänglich verlaufendes Läufer-Tragring-Segment zur Bildung des Läufer-Tragrings aufweist, und/oder
- unter verdrehter Anordnung unterschiedlicher Läuferträger-Elemente (3A.1, 3A.2, 3A.3) und damit unter umfänglichem Versatz unterschiedlicher Läufer-Tragring-Segmente (30.1, 30.2, 30.3) der Läufer-Tragring (30) zu bilden ist.

9. Läuferträger-Element nach Anspruch 1 oder 8, **dadurch gekennzeichnet, dass**
- der erste Läufer-Tragarm und der zweite Läufer-Tragarm an dem innen-vollumfänglich verlaufenden Läufer-Sitzflansch einstückig anschließen, wobei der Läufer-Sitzflansch vollumfänglich eine Öffnung umgibt, die entlang einer Zentrierachse zur Aufnahme des Aufnahmezapfens dient, und/oder
- der Läufer-Sitzflansch zur Bildung des innen-umfänglichen Läufer-Tragflansches mit einer Anzahl von Läufer-Sitzflanschen entlang der Zentrierachse anzuordnen ist, wobei unter axialem Versatz der Anzahl von Läufer-Sitzflanschen entlang der Zentrierachse der Läufer-Tragflansch zu bilden ist.

10. Läuferträger-Element nach wenigstens einem der Ansprüche 8 oder 9, **dadurch gekennzeichnet, dass**
- der Läufer-Sitzflansch einen Zentrieransatz aufweist, der ausgebildet ist, den Läufer-Sitzflansch des Läuferträger-Elements an einem entlang der Zentrierachse axial versetzten und benachbarten anderen Läufer-Sitzflansch der Anzahl von Läufer-Sitzflanschen zu zentrieren, zur Bildung des Läufer-Tragflansches, und/oder
- der Zentrieransatz mit einer umfänglich verlaufenden Zentrierstufe gebildet ist, die eine umfänglich und entlang der Zentrierachse verlaufende Zentrieransatzfläche sowie eine erste und zweite daran anschließende umfänglich und radial verlaufende Stirn-Anschlagfläche aufweist.

11. Läuferträger-Element nach wenigstens einem der Ansprüche 8 bis 10, **dadurch gekennzeichnet, dass** sich der erste Flächensektor der Generatorfläche zur Bildung des Läufer-Tragrings mit dem ersten Läufer-Schenkel und der zweite Flächensektor der Generatorfläche zur Bildung des Läufer-Tragrings mit dem zweiten Läufer-Schenkel sich in einer Scheitelwinkel-Anordnung gegenüberliegen, insbesondere
- dass sich ein erster Läufer-Tragarm und ein zweiter Läufer-Tragarm diametral gegenüberliegen.

12. Läuferträger-Element nach einem der Ansprüche 8 bis 11, **dadurch gekennzeichnet, dass**
- ein erster und zweiter Läufer-Tragarm in Form eines den ersten und zweiten Flächensektor überdeckenden Flachteils, insbesondere Speichen-Teils, gebildet ist, und/oder
- an den ersten und zweiten Läufer-Tragarm ein Läufer-Tragring-Segment in Form einer Berandungszarge im Querschnitt L-förmig anschließt, insbesondere seitlich anschließt.

13. Läuferträger-Element nach einem der Ansprüche 8 bis 12, **dadurch gekennzeichnet, dass** der Läufer-Sitzflansch
- umfänglich angeordnete erste Öffnungen aufweist zur Aufnahme von zur Anbringung und Wiederentfernung vorgesehenen Montageschrauben als Hilfsverschraubung, und
- umfänglich angeordnete zweite Öffnungen aufweist zur Aufnahme von zur Anbringung und Verbleiben vorgesehenen Betriebsschrauben als Hauptverschraubung.

14. System aus einem mehrelementigen Träger mit einer Anzahl von Trägerelementen nach Anspruch 1, insbesondere aus einem mehrelementigen Statorträger mit einer Anzahl von Statorträger-Elementen nach wenigstens einem der Ansprüche 1 bis 7 und/oder mit einem mehrelementigen Läuferträger mit einer Anzahl von Läuferträger-Elementen nach wenigstens einem der Ansprüche 1, 8 bis 13, insbesondere mit dem Statorträger mit der Anzahl von Stator-Trägerelementen und/oder mit dem Läuferträger mit der Anzahl von Läufer-Trägerelementen, wobei jedes der Trägerelemente, von einem anderen Trägerelement abnehmbar und wieder ansetzbar ist, insbesondere abnehmbar und wieder ansetzbar ist mit einer eigenen elektrischen Generator-Funktion, insbesondere derart, dass das Trägerelement getrennt transportierbar ist.

15. Generatorträger basierend auf einem System nach Anspruch 14, mit einem Statorträger und mit einem Läuferträger wobei der Läuferträger den Stator-Träger umfänglich umgibt.

16. Generator, insbesondere Ring-Generator in Form eines Synchrongenerators, vorzugsweise mit einem Aussenläufer, mit einem Generatorträger nach Anspruch 15, wobei der Statorträger eine Stator-Wicklung trägt, insbesondere mit einer Mehrzahl von Stator-Polpaketen, und der Läuferträger eine Läuferwicklung trägt, insbesondere mit einer Mehrzahl von Läufer-Polpaketen, wobei jedes der Stator-Trägerelemente und Läufer-Trägerelemente mit einem eigenen elektrischen Anschluss ausgebildet ist, eine eigene funktionsfähige Generatorfunktion auszuführen.

17. Generator-Tragsystem mit einem Generator nach Anspruch 16, aufweisend:
- einen Maschinenträger mit einem Aufnahmezapfen zum Tragen des Stators, wobei der Statorträger mit dem mittels Stator-Sitzflanschen gebildeten Stator-Tragflansch am Aufnahmezapfen angebracht ist, und/oder
- einen Achszapfen zur Anbringung einer Rotornabe, wobei der Läuferträger, insbesondere mit dem mittels Läufer-Sitzflanschen gebildeten Läufer-Tragflansch, an der Rotornabe angebracht ist.

18. Generator-Tragsystem nach Anspruch 17, **dadurch gekennzeichnet, dass**
- der mittels Stator-Sitzflanschen gebildete Stator-Tragflansch unmittelbar auf dem Aufnahmezapfen aufgesteckt ist, insbesondere den Aufnahmezapfen des Maschinenträgers fest umgibt, und/oder
- der mittels Läufer-Sitzflanschen gebildete Läufer-Tragflansch mittelbar an der Rotornabe angebracht ist und den Achszapfen frei drehbar umgibt.

19. Gondel einer Windenergieanlage mit einer hinteren Gondelverkleidung und mit einem Generator-Tragsystem nach wenigstens einem der Ansprüche 17 oder 18, sowie mit einem Rotor umfassend die Rotornabe unter Fortsetzung der hinteren Gondelverkleidung.

20. Windenergieanlage, insbesondere getriebelose Windenergieanlage, aufweisend:
- einen Turm mit einem Kopfflansch, und
- eine Gondel mit einem Generator-Tragsystem nach wenigstens einem der Ansprüche 17 oder 18, wobei der Maschinenträger am Kopfflansch angeschlossen ist und wobei die Gondel eine hintere Gondelverkleidung aufweist, sowie
- mit einem Rotor umfassend eine Rotornabe unter Fortsetzung der hinteren Gondelverkleidung.

21. Verfahren zur Montage eines Generator-Tragsystem nach wenigstens einem der Ansprüche 17 oder 18, bei dem
- ein Statorträger und ein Läuferträger zur Montage temporär über einen Montageklotz verbunden werden zur Bildung eines Generatorträgers, und
- der Generatorträger, insbesondere als Teil eines Generators, mit temporär verbundenem Statorträger und Läuferträger an einen Aufnahmezapfen des Maschinenträgers angebracht wird, wobei
- der Statorträger mit dem mittels Stator-Sitzflanschen gebildeten Stator-Tragflansch am Aufnahmezapfen angebracht wird, und wobei
- der Läuferträger, vorzugsweise mit dem mittels Läufer-Sitzflanschen gebildeten Läufer-Tragflansch, an der Rotornabe angebracht wird und ein Achszapfen die Rotornabe lagernd aufnimmt.

## Claims

1. Carrier element for a carrier of a ring generator (1), in particular stator carrier element (2A.1, 2A.2, 2A.3) for a stator carrier (2A) of a ring generator and/or rotor carrier element (3A.1, 3A.2, 3A.3) for a rotor carrier (3A) of a ring generator, wherein in order to form the carrier a number of carrier elements are combined via a generator surface, and which carrier is constructed with an outer-peripheral carrier ring (20, 30) for fitting a winding and with an inner-peripheral carrier flange (21, 31) which is constructed for transmission to a journal (11) for connection to a machine carrier (14), wherein the carrier element has:
- a first member (2S1, 22S1) which is associated with a first surface sector of the generator surface and which is constructed for composing the carrier ring,
- a second member (2S2, 22S2) which is associated with a second surface sector of the generator surface and which is constructed for composing the carrier ring (20, 30), **characterised in that**
- the first member and the second member adjoin integrally a seat flange (21.1, 21.2, 21.3, 31.1, 31.2, 31.3) which extends completely over the inner side and which is constructed for composing the carrier flange (21, 31).

2. Stator carrier element (2A.1, 2A.2, 2A.3) according to claim 1, **characterised in that**
- the first stator member (2S1) has a first radially extending stator carrier arm (23S1) and a first stator carrier ring segment which is integrally adjacent to the first stator carrier arm and which extends at the outer peripheral side for forming the stator carrier ring, and
- the second stator member (2S2) has a second radially extending stator carrier arm (23S2) and a second stator carrier ring segment which integrally adjoins the second stator carrier arm and which extends at the outer peripheral side to form the stator carrier ring, and/or
- the stator carrier ring (20) is intended to be formed with a twisted arrangement of different stator carrier elements (2A.1, 2A.2, 2A.3) and consequently with a peripheral offset of different stator carrier ring segments (20.1, 20.2, 20.3).

3. Stator carrier element according to either claim 1 or claim 2, **characterised in that**
- the first stator carrier arm and the second stator carrier arm integrally adjoin the stator seat flange which extends completely over the inner side, wherein the stator seat flange completely surrounds an opening which serves along a centering axis to receive the receiving journal, and/or
- the stator seat flange in order to form the inner peripheral stator carrier flange is intended to be arranged along the centering axis with a number of stator seat flanges, wherein the stator carrier flange is intended to be formed with an axial offset of the number of stator seat flanges along the centering axis.

4. Stator carrier element according to at least one of claims 1 to 3, **characterised in that**
- the stator seat flange has a centering lug which is constructed to centre the stator seat flange of the stator carrier element on another adjacent stator seat flange of the number of stator seat flanges, which is axially offset along the centring axis, in order to form the stator carrier flange, and/or
- the centering lug is formed with a centering step which extends peripherally along the stator seat flange and which has a centering lug face which extends peripherally and along the centering axis and a first and second adjacent, peripherally and radially extending end stop face.

5. Stator carrier element according to at least one of claims 1 to 4, **characterised in that** the first surface sector of the generator face in order to form the stator carrier ring with the first stator member (2S1) and the second surface sector of the generator face in order to form the stator carrier ring with the second stator member (2S2) are opposite each other in a vertex angle arrangement, in particular
- **in that** a first stator carrier arm and a second stator carrier arm are diametrically opposed.

6. Stator carrier element according to at least one of claims 1 to 5, **characterised in that**
- a first and a second stator carrier arm is formed in the form of a flat portion, in particular spoke portion, which covers the first and second surface sector and/or
- the first and second stator carrier arm are adjoined by a stator carrier ring segment in the form of a boundary notch with a T-shaped cross-section, in particular adjoined centrally.

7. Stator carrier element according to at least one of claims 1 to 6, **characterised in that** the stator seat flange
- has first openings which are arranged peripherally for receiving assembly screws which are provided to be fitted and removed again as an auxiliary screw connection, and
- has peripherally arranged second openings for receiving operating screws which are provided to be fitted and remain as a main screw connection.

8. Rotor carrier element (3A.1, 3A.2, 3A.3) according to claim 1, **characterised in that**
- the first rotor member (22S1) has a first radially extending rotor carrier arm (22S1) and a first rotor carrier ring segment which integrally adjoins the first rotor carrier arm and which extends at the outer peripheral side in order to form the rotor carrier ring, and
- the second rotor member (22S2) has a second radially extending rotor carrier arm (22S2) and a second rotor carrier ring segment which integrally adjoins the second rotor carrier arm and which extends at the outer peripheral side in order to form the rotor carrier ring, and/or
- the rotor carrier ring (30) is intended to be formed with a twisted arrangement of different rotor carrier elements (3A.1, 3A.2, 3A.3) and consequently with a peripheral offset of different rotor carrier ring segments (30.1, 30.2, 30.3).

9. Rotor carrier element according to claim 1 or claim 8, **characterised in that**
- the first rotor carrier arm and the second rotor carrier arm integrally adjoin the rotor seat flange which extends completely over the inner side, wherein the rotor seat flange completely surrounds an opening which serves along a centering axis to receive the receiving journal, and/or
- the rotor seat flange in order to form the inner-peripheral rotor carrier flange is intended to be arranged along the centering axis with a number of rotor seat flanges, wherein the rotor carrier flange is intended to be formed with an axial offset of the number of rotor seat flanges along the centering axis.

10. Rotor carrier element according to at least one of claims 8 or 9, **characterised in that**
- the rotor seat flange has a centering lug which is constructed to centre the rotor seat flange of the rotor carrier element on another adjacent rotor seat flange of the number of rotor seat flanges, which is axially offset along the centering axis, in order to form the rotor carrier flange, and/or
- the centering lug is formed with a centering step which extends peripherally and which has a centering lug face which extends peripherally and along the centering axis and a first and second adjacent, peripherally and radially extending end stop face.

11. Rotor carrier element according to at least one of claims 8 to 10, **characterised in that** the first surface sector of the generator face in order to form the rotor carrier ring with the first rotor member and the second surface sector of the generator face in order to form the rotor carrier ring with the second rotor member are opposite each other in a vertex angle arrangement, in particular
- **in that** a first rotor carrier arm and a second rotor carrier arm are diametrically opposed.

12. Rotor carrier element according to any one of claims 8 to 11, **characterised in that**
- a first and a second rotor carrier arm is formed in the form of a flat portion, in particular spoke portion, which covers the first and second surface sector and/or
- the first and second rotor carrier arm are adjoined by a rotor carrier ring segment in the form of a boundary notch with an L-shaped cross-section, in particular adjoined laterally.

13. Rotor carrier element according to any one of claims 8 to 12, **characterised in that** the rotor seat flange
- has first openings which are arranged peripherally for receiving assembly screws which are provided to be fitted and removed again as an auxiliary screw connection, and
- has peripherally arranged second openings for receiving operating screws which are provided to be fitted and remain as a main screw connection.

14. System comprising a multi-element carrier having a number of carrier elements according to claim 1, in particular comprising a multi-element stator carrier having a number of stator carrier elements according to at least one of claims 1 to 7, and/or having a multi-element rotor carrier having a number of rotor carrier elements according to at least one of claims 1, 8 to 13, in particular having the stator carrier having the number of stator carrier elements and/or having the rotor carrier with the number of rotor carrier elements, wherein each of the carrier elements can be removed from another carrier element and positioned again, in particular removed and positioned again with a separate electrical generator function, in particular in such a manner that the carrier element can be transported separately.

15. Generator carrier based on a system according to claim 14, having a stator carrier and having a rotor carrier, wherein the rotor carrier peripherally surrounds the stator carrier.

16. Generator, in particular ring generator in the form of a synchronous generator, preferably having an external rotor, having a generator carrier according to claim 15, wherein the stator carrier carries a stator winding, in particular having a plurality of stator field magnets, and the rotor carrier carries a rotor winding, in particular having a plurality of rotor field magnets, wherein each of the stator carrier elements and rotor carrier elements is constructed with a separate electrical connection to carry out a separate functional generator function.

17. Generator carrier system having a generator according to claim 16, having:
- a machine carrier having a receiving journal for carrying the stator, wherein the stator carrier is fitted to the stator carrier flange which is formed by means of stator seat flanges on the receiving journal, and/or
- an axle journal for fitting a rotor hub, wherein the rotor carrier is fitted to the rotor hub, in particular using the rotor carrier flange which is formed by means of rotor seat flanges.

18. Generator carrier system according to claim 17, **characterised in that**
- the stator carrier flange which is formed by means of stator seat flanges is fitted directly to the receiving journal, in particular surrounds the receiving journal of the machine carrier, and/or
- the rotor carrier flange formed by means of rotor seat flanges is fitted indirectly to the rotor hub and surrounds the axle pin so as to be able to be freely rotated.

19. Pod of a wind turbine having a rear pod cover and having a generator carrier system according to at least one of claims 17 or 18, and having a rotor comprising the rotor hub with continuation of the rear pod cover.

20. Wind turbine, in particular gearless wind turbine, having:
- a tower having an upper flange, and
- a pod having a generator carrier system according to at least one of claims 17 or 18, wherein the machine carrier is connected to the upper flange and wherein the pod has a rear pod cover, and
- having a rotor comprising a rotor hub with continuation of the rear pod cover.

21. Method for assembling a generator carrier system according to at least one of claims 17 or 18, wherein
- a stator carrier and a rotor carrier for assembly are temporarily connected by means of a mounting block in order to form a generator carrier, and
- the generator carrier is fitted, in particular as part of a generator, with temporarily connected stator carrier and rotor carrier to a receiving journal of the machine carrier, wherein
- the stator carrier is fitted to the receiving journal by means of the stator carrier flange formed by means of stator seat flanges, and wherein
- the rotor carrier, preferably with the rotor carrier flange formed by means of rotor seat flanges, is fitted to the rotor hub and an axle journal receives the rotor hub in a bearing manner.

## Revendications

1. Élément de support pour un support d'un générateur annulaire (1), en particulier élément de support de stator (2A.1, 2A.2, 2A.3) pour un support de stator (2A) d'un générateur annulaire et/ou élément de support de rotor (3A.1, 3A.2, 3A.3) pour un support de rotor (3A) d'un générateur annulaire, dans lequel un certain nombre d'éléments de support sont assemblés sur une surface de générateur pour former le support et lequel support est conçu avec une bague de support périphérique externe (20, 30) pour fixer un enroulement et avec une bride de support périphérique interne (21, 31) qui est conçue pour une transmission à un pivot (11) en vue d'une liaison avec un support machine (14), dans lequel l'élément de support présente :
- une première branche (2S1, 22S1) qui est associée à un premier secteur de surface de la surface de générateur et conçue pour l'assemblage de la bague de support,
- une seconde branche (2S2, 22S2) qui est associée à un second secteur de surface de la surface de générateur et conçue pour l'assemblage de la bague de support (20, 30),
**caractérisé en ce que**
- la première branche et la seconde branche sont raccordées d'un seul tenant à une bride de siège (21.1, 21.2, 21.3, 31.1, 31.2, 31.3) s'étendant sur toute la périphérie interne, qui est conçue pour l'assemblage de la bride de support (21, 31).

2. Élément de support de stator (2A.1, 2A.2, 2A.3) selon la revendication 1, **caractérisé en ce que**
- la première branche de stator (2S1) présente un premier bras de support de stator (23S1) s'étendant radialement et un premier segment de bague de support de stator s'étendant sur la périphérie externe et raccordé d'un seul tenant au premier bras de support de stator pour former la bague de support de stator, et
- la seconde branche de stator (2S2) présente un second bras de support de stator s'étendant radialement (23S2) et un second segment de bague de support de stator s'étendant sur la périphérie externe et raccordé d'un seul tenant au second bras de support de stator pour former la bague de support de stator,
et/ou
- la bague de support de stator (20) doit être formée avec une disposition torsadée de différents éléments de support de stator (2A.1, 2A.2, 2A.3) et ainsi avec un décalage périphérique de différents segments de bague de support de stator (20.1, 20.2, 20.3) .

3. Élément de support de stator selon l'une des revendications 1 ou 2, **caractérisé en ce que**
- le premier bras de support de stator et le second bras de support de stator sont raccordés d'un seul tenant à la bride de siège de stator s'étendant sur toute la périphérie interne, dans lequel la bride de siège de stator entoure sur toute sa périphérie une ouverture qui sert à recevoir le pivot de réception le long d'un axe de centrage, et/ou
- la bride de siège de stator doit être agencée pour former la bride de support de stator périphérique interne avec un certain nombre de brides de siège de stator le long de l'axe de centrage, dans lequel la bride de support de stator doit être formée avec un décalage axial du nombre de brides de siège de stator le long de l'axe de centrage.

4. Élément de support de stator selon au moins l'une des revendications 1 à 3, **caractérisé en ce que**
- la bride de siège de stator présente un épaulement de centrage qui est conçu pour centrer la bride de siège de stator de l'élément de support de stator sur une autre bride de siège de stator adjacente et décalée axialement le long de l'axe de centrage parmi le nombre de brides de siège de stator, pour former la bride de support de stator, et/ou
- l'épaulement de centrage est formé avec un étage de centrage s'étendant sur la périphérie le long de la bride de siège de stator, qui présente une surface d'épaulement de centrage s'étendant sur la périphérie et le long de l'axe de centrage ainsi qu'une première et seconde surface de butée frontale se raccordant à celle-ci et s'étendant sur la périphérie et radialement.

5. Élément de support de stator selon au moins l'une des revendications 1 à 4, **caractérisé en ce que** le premier secteur de surface de la surface de générateur pour former la bague de support de stator avec la première branche de stator (2S1) et le second secteur de surface de la surface de générateur pour former la bague de support de stator avec la seconde branche de stator (2S2) sont opposés l'un à l'autre selon une disposition d'angle au sommet, en particulier,
- **en ce qu'**un premier bras de support de stator et un second bras de support de stator sont diamétralement opposés l'un à l'autre.

6. Élément de support de stator selon au moins l'une des revendications 1 à 5, **caractérisé en ce que**
- un premier et second bras de support de stator est formé sous la forme d'une partie plate, en particulier d'une partie à rayons, recouvrant le premier et second secteur de surface, et/ou
- un segment de bague de support de stator sous la forme d'un châssis de bordure est raccordé en forme de T en section transversale, en particulier est raccordé au centre, au premier et second bras de support de stator.

7. Élément de support de stator selon au moins l'une des revendications 1 à 6, **caractérisé en ce que** la bride de siège de stator
- présente des premières ouvertures disposées sur la périphérie pour recevoir, en tant que raccord auxiliaire, des vis de montage prévues pour la fixation et le démontage, et
- présente des secondes ouvertures disposées sur la périphérie pour recevoir, en tant que raccord principal, des vis d'actionnement prévues pour la fixation et le maintien.

8. Elément de support de rotor (3A.1, 3A.2, 3A.3) selon la revendication 1, **caractérisé en ce que**
- la première branche de rotor (22S1) présente un premier bras de support de rotor s'étendant radialement (22S1) et un premier segment de bague de support de rotor s'étendant sur la périphérie externe et raccordé d'un seul tenant au premier bras de support de rotor pour former la bague de support de rotor, et
- la seconde branche de rotor (22S2) présente un second bras de support de rotor s'étendant radialement (22S2) et un second segment de bague de support de rotor s'étendant sur la périphérie externe et raccordé d'un seul tenant au second bras de support de rotor, pour former la bague de support de rotor, et/ou
- la bague de support de rotor (30) doit être formée avec une disposition torsadée de différents éléments de support de rotor (3A.1, 3A.2, 3A.3) et ainsi avec un décalage périphérique de différents segments de bague de support de rotor (30.1, 30.2, 30.3) .

9. Elément de support de rotor selon la revendication 1 ou 8, **caractérisé en ce que**
- le premier bras de support de rotor et le second bras de support de rotor sont raccordés d'un seul tenant à la bride de siège de rotor s'étendant sur toute la périphérie interne, dans lequel la bride de siège de rotor entoure sur toute sa périphérie une ouverture qui sert à recevoir le pivot de réception le long d'un axe de centrage, et/ou
- la bride de siège de rotor doit être agencée pour former la bride de support de rotor périphérique interne avec un certain nombre de brides de siège de rotor le long de l'axe de centrage, dans lequel la bride de support de rotor doit être formée avec un décalage axial du nombre de brides de siège de rotor le long de l'axe de centrage.

10. Elément de support de rotor selon au moins l'une des revendications 8 ou 9, **caractérisé en ce que**
- la bride de siège de rotor présente un épaulement de centrage qui est conçu pour centrer la bride de siège de rotor de l'élément de support de rotor sur une autre bride de siège de rotor adjacente et décalée axialement le long de l'axe de centrage parmi le nombre de brides de siège de rotor, pour former la bride de support de rotor, et/ou
- l'épaulement de centrage est formé avec un étage de centrage s'étendant sur la périphérie, qui présente une surface d'épaulement de centrage s'étendant sur la périphérie et le long de l'axe de centrage, ainsi qu'une première et seconde surface de butée frontale se raccordant à celle-ci et s'étendant sur la périphérie et radialement.

11. Elément de support de rotor selon au moins l'une des revendications 8 à 10, **caractérisé en ce que** le premier secteur de surface de la surface de générateur pour former la bague de support de rotor avec la première branche de rotor et le second secteur de surface de la surface de générateur pour former la bague de support de rotor avec la seconde branche de rotor sont opposés l'un à l'autre selon une disposition d'angle au sommet, en particulier
- **en ce qu'**un premier bras de support de rotor et un second bras de support de rotor sont diamétralement opposés l'un à l'autre.

12. Elément de support de rotor selon l'une des revendications 8 à 11, **caractérisé en ce que**
- un premier et second bras de support de rotor est formé sous la forme d'une partie plate, en particulier d'une partie à rayons, recouvrant le premier et second secteur de surface, et/ou
- un segment de bague de support de rotor sous la forme d'un châssis de bordure est raccordé en forme de L en section transversale, en particulier est raccordé latéralement, au premier et second bras de support de rotor.

13. Elément de support de rotor selon l'une des revendications 8 à 12, **caractérisé en ce que** la bride de siège de rotor
- présente des premières ouvertures disposées sur la périphérie pour recevoir, en tant que raccord auxiliaire, des vis de montage prévues pour la fixation et le démontage, et
- présente des secondes ouvertures disposées sur la périphérie pour recevoir, en tant que raccord principal, des vis d'actionnement prévues pour la fixation et le maintien.

14. Système composé d'un support multi-éléments avec un certain nombre d'éléments de support selon la revendication 1, en particulier d'un support de stator multi-éléments avec un certain nombre d'éléments de support de stator selon au moins l'une des revendications 1 à 7 et/ou avec un support de rotor multi-éléments avec un certain nombre d'éléments de support de rotor selon au moins l'une des revendications 1, 8 à 13, en particulier avec le support de stator avec le nombre d'éléments de support de stator et/ou avec le support de rotor avec le nombre d'éléments de support de rotor, dans lequel chacun des éléments de support peut être retiré d'un autre élément de support et remis en place, en particulier peut être retiré et remis en place avec sa propre fonction génératrice électrique, en particulier de telle sorte que l'élément de support peut être transporté séparément.

15. Support de générateur basé sur un système selon la revendication 14, avec un support de stator et avec un support de rotor dans lequel le support de rotor entoure le support de stator sur la périphérie.

16. Générateur, en particulier générateur annulaire sous la forme d'un générateur synchrone, de préférence avec un rotor extérieur, avec un support de générateur selon la revendication 15, dans lequel le support de stator supporte un enroulement de stator, en particulier avec une pluralité de paquets polaires de stator, et le support de rotor supporte un enroulement de rotor, en particulier avec une pluralité de paquets polaires de rotor, dans lequel chacun des éléments de support de stator et des éléments de support de rotor est conçu avec son propre raccordement électrique pour réaliser sa propre fonction génératrice opérationnelle.

17. Système de support de générateur avec un générateur selon la revendication 16, comprenant :
- un support machine avec un pivot de réception pour supporter le stator, dans lequel le support de stator est fixé au pivot de réception avec la bride de support de stator formée au moyen de brides de siège de stator, et/ou
- un tourillon pour la fixation d'un moyeu de rotor, dans lequel le support de rotor, en particulier avec la bride de support de rotor formée au moyen de brides de siège de rotor, est fixé au moyeu de rotor.

18. Système de support de générateur selon la revendication 17, **caractérisé en ce que**
- la bride de support de stator formée au moyen de brides de siège de stator est placée directement sur le pivot de réception, en particulier entoure fermement le pivot de réception du support machine, et/ou
- la bride de support de rotor formée au moyen de brides de siège de rotor est fixée indirectement au moyeu de rotor et entoure le tourillon en rotation libre.

19. Nacelle d'une éolienne avec un habillage de nacelle arrière et avec un système de support de générateur selon au moins l'une des revendications 17 ou 18, ainsi qu'avec un rotor comprenant le moyeu de rotor à la suite de l'habillage de nacelle arrière.

20. Éolienne, en particulier éolienne sans engrenage, comprenant :
- une tour avec une bride de tête, et
- une nacelle avec un système de support de générateur selon au moins l'une des revendications 17 ou 18, dans laquelle le support machine est raccordé à la bride de tête et dans laquelle la nacelle présente un habillage de nacelle arrière, ainsi que
- avec un rotor comprenant un moyeu de rotor à la suite de l'habillage de nacelle arrière.

21. Procédé de montage d'un système de support de générateur selon au moins l'une des revendications 17 ou 18, dans lequel
- un support de stator et un support de rotor sont reliés temporairement par l'intermédiaire d'un bloc de montage en vue d'un montage pour former un support de générateur, et
- le support de générateur, en particulier en tant que partie d'un générateur, avec le support de stator et le support de rotor reliés temporairement, est fixé à un pivot de réception du support machine, dans lequel
- le support de stator, avec la bride de support de stator formée au moyen de brides de siège de stator, est fixé au pivot de réception, et dans lequel
- le support de rotor, de préférence avec la bride de support de rotor formée au moyen de brides de siège de rotor, est fixé au moyeu de rotor et un tourillon reçoit de manière portante le moyeu de rotor.
